(19) Europäisches Patentamt / European Patent Office / Office européen des brevets

(11) **EP 4 249 242 A1**

(12) **EUROPEAN PATENT APPLICATION**
published in accordance with Art. 153(4) EPC

(43) Date of publication:
**27.09.2023 Bulletin 2023/39**

(21) Application number: **21894754.7**

(22) Date of filing: **19.11.2021**

(51) International Patent Classification (IPC):
*B32B 27/00* (2006.01)    *B32B 27/18* (2006.01)
*B32B 27/30* (2006.01)    *C09J 107/02* (2006.01)
*C09J 133/04* (2006.01)    *H01B 7/00* (2006.01)
*C09J 7/24* (2018.01)    *C09J 7/38* (2018.01)
*B32B 7/022* (2019.01)

(52) Cooperative Patent Classification (CPC):
B32B 7/022; B32B 27/00; B32B 27/18;
B32B 27/30; C09J 7/24; C09J 7/38; C09J 107/02;
C09J 133/04; H01B 7/00

(86) International application number:
**PCT/JP2021/042620**

(87) International publication number:
**WO 2022/107883 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.11.2020 JP 2020193648**

(71) Applicant: **Nitto Denko Corporation
Ibaraki-shi, Osaka 567-8680 (JP)**

(72) Inventors:
• **HARADA, Tomohito**
**Ibaraki-shi, Osaka 567-8680 (JP)**
• **NAKAGAWA, Yoshio**
**Ibaraki-shi, Osaka 567-8680 (JP)**
• **FUKUI, Yuta**
**Ibaraki-shi, Osaka 567-8680 (JP)**
• **ABE, Ryosuke**
**Ibaraki-shi, Osaka 567-8680 (JP)**

(74) Representative: **Grünecker Patent- und
Rechtsanwälte
PartG mbB
Leopoldstraße 4
80802 München (DE)**

(54) **ADHESIVE TAPE AND USE OF SAME**

(57) Provided is a pressure-sensitive adhesive (PSA) tape that retains function and performance as a PSA tape required for various application as well as has abrasion resistance. The PSA tape includes a substrate layer formed from a polyvinyl chloride-based film, and a PSA layer disposed on at least one side of the substrate layer. In the PSA tape, the substrate layer contains polyvinyl chloride and a plasticizer. The content of the plasticizer in the substrate layer is 20% by mass or more to less than 36% by mass. The thickness of the substrate layer is more than 115 $\mu$m to less than 400 $\mu$m. The PSA tape has an abrasive resistance value of 300 mm or more in an abrasion resistance test as measured under conditions with a weight of 450 g and a sand paper transfer rate of 1500 mm/min in accordance with ISO6722.

[Fig. 1]

EP 4 249 242 A1

**Description**

[Technical Field]

The present invention relates to a pressure-sensitive adhesive (PSA) tape including polyvinyl chloride (PVC) film, and a wire harness using the PSA tape.
The application claims priority to Japanese Patent Application No. 2020-193648 filed on November 20, 2020, and the entire contents of which are incorporated herein by reference.

[Background Art]

A PSA tape having a PSA layer at least on one side of PVC film (hereinafter also referred to as "PVC PSA tape") has offered good workability and thus been widely used in various applications such as electrical insulation, wrapping, and protection. Exemplary conventional technical literatures related to PVC PSA tapes include Patent Documents 1 to 3.

[Citation List]

[Patent Literature]

[Patent Document 1] WO2019/069577
[Patent Document 2] WO2018/225541
[Patent Document 3] WO2019/049565

[Summary of Invention]

[Technical Problem]

The PVC PSA tape has been preferably used as an electric wire binding tape in a wire harness, which consists of a number of electric wire groups to be routed in an automobile, an aircraft, or another vehicle. Since such a wire harness may interfere a body or other parts depending on its routing path, an exterior protection material such as a corrugated tube, a twist tube, a PVC tube, or PVC sheet was further attached to the outside of an electric wire bundle wrapped with a PVC PSA tape. In recent years, electric wire binding tapes tends to become thinner in view of a function and performance such as weight reduction, prevention of tape end peel (also referred to as "edge peel") after binding, and retention of flexibility of the harness; such a PSA tape generally has low abrasion resistance, and use of the exterior protection material has been indispensable.
Meanwhile, with regard to productivity, the exterior protection material must be attached basically with handwork, which requires large workload. Elimination of need for the exterior protection material allows omission of attachment operation, reduction of the number of parts, etc., and can be expected to offer improved productivity such as promotion of automation. In addition, this may also enable weight reduction of a wire harness as a whole. However, as described above, electric wire binding tapes currently used have relatively low abrasion resistance and thin thickness due to a function, performance, etc. required. When used with keeping exposed with no exterior protection material, such tapes may be broken by contact with another member or the like, and be unable to satisfy durability in practical use. A larger thickness of the tapes provides improved abrasion resistance, but may lead to reduction in prevention of tape end peel and flexibility, and collide with the concept of weight reduction. Briefly, there is a technical trade-off between abrasion resistance, and maintenance of a function and performance of a PSA tape as well as weight reduction.
The inventors earnestly investigated combination of the abrasion resistance, and maintenance of a function and performance of PSA tape as well as weight reduction, and consequently achieved completion of the present invention. In other words, the present invention provides a PSA tape that retains a function and performance as a PSA tape required for various application such as electric wire binding as well as has abrasion resistance enabling omission of an exterior protection material. Another related object is to provide a wire harness using such a PSA tape.

[Solution to Problem]

The specification provides a PSA tape including a substrate layer formed from a polyvinyl chloride-based film, and a PSA layer disposed on at least one side of the substrate layer. In the PSA tape, the substrate layer contains polyvinyl chloride and a plasticizer. The content of the plasticizer in the substrate layer is 20% by mass or more to less than 36% by mass. The thickness of the substrate layer is more than 115 $\mu$m to less than 400 $\mu$m. The PSA tape has an abrasive resistance value of 300 mm or more in an abrasion resistance test as measured under conditions with a weight of 450 g and a sand paper transfer rate of 1500 mm/min in accordance with ISO6722. The PSA tape having such a configuration can retain a function, performance, etc. required for a PSA tape (e.g., edge-peel prevention and flexibility), as well as achieve abrasion resistance that allows omission of an exterior protection material. The abrasive resistance value is more preferably 500 mm or more.

In some preferable embodiments, the ratio of the thickness of the substrate layer Ts [$\mu$m] to the thickness of the PSA layer $T_{PSA}$ [$\mu$m] ($T_S/T_{PSA}$) is within the range of 6 to 13. The PSA tape satisfying this ratio ($T_S/T_{PSA}$) can preferably achieve an effect by the art disclosed herein.

In some preferable embodiments, the substrate layer further contains an elastomer. The content of the elastomer is less than 50% by mass in the substrate layer. Such a composition facilitates providing a higher abrasive resistance value, and can exert better abrasion resistance.

In some preferable embodiments, the substrate layer contains at least one of carboxylate ester and a polyester-based plasticizer as the plasticizer. Use of at least one of carboxylate ester and a polyester-based plasticizer as a plasticizer contained in the substrate layer preferably allows exertion of an effect by the art disclosed herein.

In some embodiments, the PSA layer is formed from a water-dispersed PSA composition containing rubber latex or an acrylic polymer emulsion, and a tackifier resin emulsion. Use of such a rubber-based PSA or an acrylic PSA provides a PVC PSA tape that exhibits good adhesive properties. Such a PVC PSA tape has a potential to exert performance to e.g., enable prevention of edge peel for long periods. In some preferable embodiments, the rubber latex contains natural rubber latex and styrene-butadiene rubber latex.

Furthermore, the specification provides a wire harness having a configuration including an electric wire wrapped with any of PSA tapes disclosed herein. In this wire harness, the back side of the PSA tape is not covered with any protection material and is exposed. Since the PSA tape disclosed herein retains a function, performance, etc., required for applications such as electric wire binding, as well as have improved abrasion resistance, and thus eliminates need of a protection material conventionally disposed on the back side of a binding tape for ensuring abrasion resistance. A wire harness with no protection material can have good productivity, and achieve weight reduction.

[Brief Description of Drawings]

Fig. 1 shows a schematic cross-sectional view illustrating a configuration of the PSA tape according to an embodiment.
Fig. 2 shows a schematic explanatory diagram of an abrasion resistance test.
Fig. 3 is a schematic explanatory diagram of a flexibility evaluation test.

[Description of Embodiments]

Preferred embodiments of the present invention will now be described below. Matters necessary to practice the present invention other than those specifically referred to herein can be understood by a person skilled in the art based on teaching for practice of the invention described herein and common technical knowledge at the filing date. The present invention can be implemented based on the contents disclosed herein and common technical knowledge in the art.

<Configuration Example of PSA Tape >

The PSA tape disclosed herein is a PSA tape including a substrate layer formed from a polyvinyl chloride-based film, and a PSA layer disposed on at least one side of the substrate layer. The PSA tape may take a form of, e.g., a single-sided PSA tape with a substrate (support substrate) having a PSA layer on one side of the substrate, or may be a double-sided PSA tape with a substrate having PSA layers on each side of the substrate. The PSA tape disclosed herein may be a roll-shape or a leaflet-shape. The PSA tape may also be processed to have slits on an edge of a tape in order to improve ease in cutting the tape in tape wrapping work.

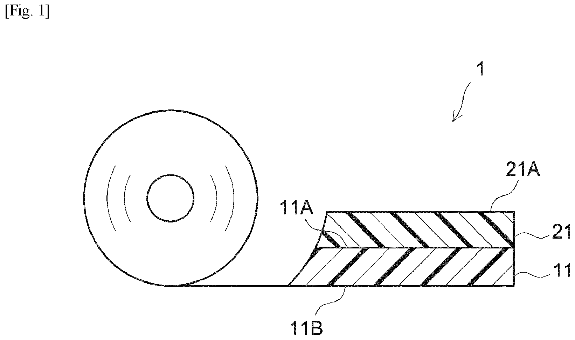

Fig. 1 illustrates a configuration example of the PSA tape disclosed herein. A PVC PSA tape 1 depicted in Fig. 1 is configured as a single-sided PSA tape that includes a substrate layer (e.g., monolayer PVC film) 11 having a first side 11A and a second side 11B, and a PSA layer 21 disposed on the first side 11A. Before use (i.e., before attachment to an adherend), the PSA tape 1 can take a form of e.g., a PSA tape roll as shown in Fig. 1, in which roll-up of the PSA tape 1 in a longitudinal direction causes the PSA layer 21 to come in contact with the second side 11B of the substrate layer 11 and thus protects the surface (PSA side) 21A. Alternatively, the surface 21A of the PSA layer 21 may take a form in which at least a side opposite to the PSA layer 21 is protected by a release liner, which serves as a release side. As the release liner, a known or commonly-used one can be used without any particular limitation. Examples thereof to be used can include a release liner having a release-treated layer on a surface of a substrate such as plastic film or paper, and a release liner made of a poorly-adherent material such as a fluorine polymer (polytetrafluoroethylene, etc.) or a polyolefin-based resin (polyethylene, polypropylene, etc.).

<Abrasion Resistance Properties>

The PSA tape disclosed herein is characterized by an abrasive resistance value of 300 mm or more in an abrasion resistance test. A PSA tape having an abrasive resistance value of 300 mm or more achieves excellent abrasion resistance. For example, in an application for electric wire binding of a wire harness, the PSA tape can achieve abrasion resistance that enables omission of an exterior protection material. The abrasive resistance value is preferably 500 mm or more, more preferably 700 mm or more, even more preferably 900 mm or more, and particularly preferably 1100 mm or more. The upper limit of the abrasive resistance value is not particularly limited, but may be 3000 mm or less, or 2000 mm or less (e.g., 1500 mm or less) in view of combining with another function, performance, etc. required for a PSA tape (e.g., edge-peel prevention and flexibility). The abrasion resistance test is performed under conditions with a weight of 450 g and a sand paper transfer rate of 1500 mm/min in accordance with ISO6722. In detail, measurement is carried out by a method in the examples described later.

In the art disclosed herein, the abrasion resistance properties can be achieved primarily by setting of the thickness of the substrate layer and selection of the content of the plasticizer in the substrate layer. More particularly, in a configuration including the substrate layer with a thickness within the range of more than 115 $\mu$m to less than 400 $\mu$m, appropriate selection of the content of the plasticizer within the range of 20% by mass or more to less than 36% by mass allows retaining a function, performance, etc. required for a PSA tape (e.g., flexibility and edge peel prevention), as well as achieving abrasion resistance with an abrasive resistance value of 300 mm or more by the abrasion resistance test. This point will be described in detail. In investigation for improving abrasion resistance of a PVC PSA tape, the inventors first subjected the abrasion volume derived from the abrasion resistance test to a trial calculation by 3D-CAD simulation with changing the thickness of the PSA tape (more particularly, the thickness of the substrate layer), and obtained a relational expression showing that the abrasion volume is proportional to about the square of the thickness. This expression was applied to an abrasion model formula that shows relation between abrasiveness and mechanical properties (Ratner's formula), and a relational expression was obtained as follows:

[Mathematical 1]

$$\text{Abrasion length L} = \frac{0.0142}{\text{K5} \times \text{W}} \times \frac{\text{H} \times \sigma \times \varepsilon}{\mu\text{k}} \times \text{t}^{2.067}$$

where K5 is a constant, W is weight, H is hardness, $\sigma$ is tensile strength, $\varepsilon$ is breaking elongation, $\mu$k is a kinetic friction coefficient, and t is thickness. Then, PSA tapes containing various amounts of the plasticizer in the substrate layer were investigated for a linkage with (H $\times$ $\sigma$ $\times$ $\varepsilon$)/$\mu$k, which is a term of physical properties in the aforementioned expression, by experiments, and the results shows a positive proportional relation between the amount of the plasticizer and kinetic friction coefficient ($\mu$k), and a negative proportional relation between the amount of the plasticizer and tensile strength multiplied with breaking elongation ($\sigma$ $\times$ $\varepsilon$). These were applied to the aforementioned expression to derive a relation with abrasion length L. Consequently, the findings were obtained that a configuration including a substrate layer with a thickness of less than 400 $\mu$m for retaining a function, performance, etc. required for a PSA tape (e.g., edge-peel prevention and flexibility) can provide an abrasive resistance value of 300 mm or more, which corresponds to abrasion length L, in presence of the substrate layer having a thickness of more than 115 $\mu$m and the plasticizer in an amount within the range of 20% by mass or more to less than 36% by mass. The present invention is embodied by performing the experiments illustrated in the examples described later on the basis of the technical idea. Note that the explanations described so far are based on simulations, experiments and consideration by the inventors, and the art disclosed herein is not limited to the interpretation described above.

<Substrate Layer >

The substrate layer disclosed herein is formed from a PVC film. The PVC film can be obtained typically by forming a film from a PVC composition that contains prescribed ingredients by a known method. The PVC composition herein refers to a composition of PVC present as a primary component, i.e., a component accounting for more than 50 % by mass, among resin components. Such a PVC composition can form a PVC film (typically a film formed from a soft PVC resin) that exhibits favorable physical properties as a substrate for a PSA tape. The amount of PVC in the resin components of the PVC composition is preferably 80 % by mass or more, and more preferably about 90 % by mass or more. Essentially all of the resin components may be PVC.

(PVC)

The PVC contained in the PVC composition can be various types of polymers containing vinyl chloride as a primary monomer (a primary component of monomer components, i.e., a monomer accounting for more than 50 % by mass). In other words, the concept of the PVC herein encompasses not only vinyl chloride homopolymers but also copolymers of vinyl chloride and various comonomers. Examples of the comonomers include vinylidene chloride; olefins such as ethylene and propylene (preferably olefins having 2 to 4 carbons); carboxy group-containing monomers such as acrylic acid, methacrylic acid (hereinafter, acryl and methacryl are comprehensively referred to as "(meth)acryl"), maleic acid and fumaric acid, and acid anhydrides thereof (maleic acid anhydride, etc.); (meth)acrylate esters such as esters of (meth)acrylic acid and alkyl alcohols or cycloalkyl alcohols having about 1 to 10 carbons; vinyl ester-based monomers such as vinyl acetate and vinyl propionate; styrene-based monomers such as styrene, substituted styrene ($\alpha$-methylstyrene, etc.) and vinyl toluene; and acrylonitrile. The copolymer preferably contains vinyl chloride at a copolymerization ratio of 70 % by mass or more (more preferably 90 % by mass or more). Such monomers can be polymerized by a suitable method (typically a suspension polymerization method), thereby providing the PVC.

Examples of the mean degree of polymerization of the PVC in the PVC composition can be, but not particularly limited to, approximately 800 to 1800. In view of the balance between processibility (formability) and strength, etc., preferable is a PVC composition having a mean degree of polymerization of approximately 1000 to 1500.

The content of the PVC in the substrate layer is typically 30% by mass or more, and may be 40% by mass or more. In view of favorable exertion of action of the PVC, the content of the PVC is suitably 50% by mass or more (e.g., more than 50% by mass), preferably 55% by mass or more, more preferably 60% by mass or more, and even more preferably 65% by mass or more. Increase in an amount of the PVC in the substrate layer facilitates improvement of abrasion resistance. The upper limit of the content of the PVC in the substrate layer is, e.g., approximately 80% by mass or less, and in view of softness and followability, may be preferably 75% by mass or less, more preferably 70% by mass or less, and e.g., 65% by mass or less.

(Plasticizer)

The substrate layer disclosed herein includes a plasticizer. Use of an appropriate amount of the plasticizer preferably provides a PSA tape that combines a function and performance as a PSA tape (e.g., edge-peel prevention and flexibility), and abrasion resistance. As the plasticizer, various materials known to exhibit a plasticizing effect of PVC can be used without any particular limitation. Examples of the plasticizer include, but not limited to, aromatic carboxylate esters such as benzoate esters (glycol benzoate, etc.), phthalate esters, terephthalate esters (di-2-ethylhexyl terephthalate, etc.), trimellitate esters and pyromellitate esters; aliphatic carboxylate esters such as adipate esters, sebacate esters, azelate esters, maleate esters and citrate esters (tributyl acetylcitrate, etc.); polyesters of polycarboxylic acids and polyhydric alcohols; as well as polyether-based polyesters; epoxy-based polyesters (epoxidized vegetable oils such as epoxidized soybean oil and epoxidized linseed oil, epoxidized aliphatate alkyl esters, etc.); and phosphate esters (tricresyl phosphate, etc.). The plasticizer can be used alone as one species or in a suitable combination of two or more species.

Examples of the phthalate ester (phthalate ester-based plasticizer) to be used can include a diester of phthalic acid and alkyl alcohol having 4 to 16 (preferably 6 to 14, typically 8 to 13) carbons, and favorable examples include di-*n*-octyl phthalate, di-2-ethylhexyl phthalate, diisononyl phthalate and diisodecyl phthalate.

Examples of the trimellitate ester (trimellitate ester-based plasticizer) to be used can include a triester of trimellitic acid and alkyl alcohol having 6 to 14 (typically 8 to 12) carbons, and favorable examples include tri-*n*-octyl trimellitate, tri-2-ethylhexyl trimellitate, triisononyl trimellitate, tri-*n*-decyl trimellitate and triisodecyl trimellitate.

Examples of the pyromellitate ester (pyromellitate ester-based plasticizer) to be used can include a tetraester of pyromellitic acid and alkyl alcohol having 6 to 14 (typically 8 to 12) carbons, and favorable examples include tetra-*n*-octyl pyromellitate, tetra-2-ethylhexyl pyromellitate and tri-*n*-decyl pyromellitate.

Examples of the adipate ester (adipate ester-based plasticizer) to be used can include a diester of adipic acid and alkyl alcohol with 4 to 16 (preferably 6 to 14, typically 8 to 13) carbons, and favorable examples include di-*n*-octyl adipate, di-2-ethylhexyl adipate and diisononyl adipate.

Examples of the polyester (polyester-based plasticizer) to be used can include a polyester compound derived from polycarboxylic acid and polyhydric alcohol. The polycarboxylic acid may be, for example, succinic acid, adipic acid, suberic acid, azelaic acid, sebacic acid, citric acid, phthalic acid, isophthalic acid, terephthalic acid, or trimellitic acid.

The polyhydric alcohol may be, for example, (poly)ethylene glycol (note that the term "(poly)ethylene glycol" here comprehensively refers to ethylene glycol and polyethylene glycol, and that the same applies hereinafter), (poly)propylene glycol, (poly)butylene glycol, (poly)hexanediol, (poly)neopentyl glycol, or polyvinyl alcohol. The polycarboxylic acid is preferably an aliphatic dicarboxylic acid having 4 to 12 (typically 6 to 10) carbons, and favorable examples thereof include adipic acid and sebacic acid. In particular, in view of the versatility and cost, adipic acid is desirable. Examples of the polyhydric alcohol preferably include aliphatic diol having 2 to 10 carbons, and favorable examples include ethylene glycol and butylene glycol (e.g. 1,3-butanediol, 1,4-butanediol).

In some preferable embodiments, a carboxylate ester is preferably used as the plasticizer in the substrate layer. As the carboxylate ester, the aforementioned aromatic carboxylate ester and aliphatic carboxylate ester can be used alone as one species or in combination of two or more species.

The molecular weight of the plasticizer is not particularly limited. In some embodiments, a plasticizer having a molecular weight of less than 1500 (e.g., less than 1000) is used as the plasticizer. The molecular weight of the plasticizer may be e.g., 250 or more to 400 or more. The upper limit of the molecular weight of the plasticizer is not particularly limited, and in view of operability, etc., the plasticizer having a molecular weight of 800 or less (e.g., less than 600, and further less than 500) may be preferably used. Particularly, a carboxylate ester having this molecular weight is preferably used.

In some embodiments, the substrate layer may contain a polyester-based plasticizer as the plasticizer. Such an embodiment facilitates production of a PSA tape that combines heat degradation resistance and other properties at a high level. In some preferable embodiments, the substrate layer contains a polyester-based plasticizer and a carboxylate ester in combination. According to the embodiments, intermolecular interaction between the polyester-based plasticizer and the carboxylate ester can prevent the carboxylate ester from volatilization, transfer to the PSA layer and the like. This is preferable in view of reducing heat degradation of the substrate layer and temporal change of adhesiveness. In such an embodiment, more preferable is combination of a polyester-based plasticizer having a molecular weight of 1000 or more and a carboxylate ester having a molecular weight of less than 1000.

As the carboxylate ester having a molecular weight of less than 1000 (PLL), solely one species or a combination of two or more species can be used from species having a molecular weight of less than 1000 among aromatic carboxylate esters and aliphatic carboxylate esters as described above. Examples thereof to be used can include phthalate esters (di-*n*-octyl phthalate, di-2-ethylhexyl phthalate, diisononyl phthalate, diisodecyl phthalate, etc.), adipate esters (di-*n*-octyl adipate, di-2-ethylhexyl adipate, diisononyl adipate, etc.), trimellitate esters (tri-*n*-octyl trimellitate, tri-2-ethylhexyl trimellitate, etc.), pyromellitate esters (tetra-*n*-octyl pyromellitate, tetra-2-ethylhexyl pyromellitate, tri-*n*-decyl pyromellitate, etc.), citrate esters, sebacate esters, azelate esters, maleate esters and benzoate esters.

As the PLL, an aromatic carboxylate ester can be preferably used. In particular, an ester compound derived from atri-functional or higher (typically tri-functional or tetra-functional) aromatic carboxylic acid is preferable, with the specific examples including trimellitate esters and pyromellitate esters. Such a PLL is likely to exert an effect of the intermolecular interaction as described above and is also compatible with PVC. It is also preferable because of a tendency to have less volatility compared to an ester compound derived from a mono-functional or di-functional aromatic carboxylic acid.

The molecular weight of the PLL is typically 250 or more, and in view of heat degradation resistance, etc., preferably 400 or more, and more preferably 500 or more. The art disclosed herein can be preferably implemented in an embodiment using a PLL having a molecular weight of 600 or more (more preferably 650 or more, e.g. 700 or more). The upper limit of the molecular weight of the PLL is not particularly limited as long as it is less than 1000. In view operability, etc., a PLL having a molecular weight of 950 or less (e.g. 900 or less) can be commonly preferably used.

The number of carbons in an ester residue in the PLL is preferably 6 or more, and more preferably 8 or more. Such a PLL is likely to exert an effect of the intermolecular interaction described above. It is also preferable because of a tendency to decrease in volatility with increase in molecular weight. In addition, longer molecular chain leads to increase in flexibility and facilitates to form into a liquid at room temperature, thereby improving operability. The upper limit of the number of carbons in the ester residue is not particularly limited, but in view of approximately compatibility to PVC, etc., commonly 16 or less, preferably 14 or less, and more preferably 12 or less (e.g. 10 or less).

As the polyester-based plasticizer having a molecular weight of 1000 or more (PLH), solely one species or a combination of two or more species can be used from species having a molecular weight of 1000 or more among polyester-based plasticizers as described above. In view of a plasticizing effect, softness at low temperature, etc., a polyester of aliphatic dicarboxylic acid having 4 to 12 (typically 6 to 10) carbons and polyhydric alcohol is preferable. Particularly preferable is an adipic acid-based polyester plasticizer derived from dicarboxylic acid containing adipic acid as a primary component and aliphatic diol such as neopentyl glycol, propylene glycol or ethylene glycol. Such an adipic acid-based polyester plasticizer has a great degree of intermolecular interaction with the PLL and PVC, thereby preferably exerting an effect to prevent a plasticizer from volatilization.

Specific examples of commercial products that can be used as the PLH in the art disclosed herein include products of DIC Corporation under product names "W-230H", "W-1020EL", "W-1410EL", "W-2050", "W-2300", "W-2310", "W-2314", "W-2360", "W-360ELS" and "W-4010"; products of ADEKA Corporation under product names "P-300", "PN-250", "PN-400", "PN-650", "PN-1030" and "PN-1430"; and products of Kao Corporation under product name "HA-5".

The molecular weight of the PLH is preferably 1000 or more. In view of facilitating achieving a desired effect, it is commonly advantageous to use a PLH having a molecular weight of 2000 or more (e.g., 3000 or more). The art disclosed herein can be preferably implemented in an embodiment using a PLH having a molecular weight of 4000 or more (e.g. 5000 or more). The upper limit of the molecular weight of the PLH is not particularly limited, but it is commonly suitably less than 100000. In view of exerting more plasticizing effect of the PVC to facilitate achieving softness required for a PVC PSA tape, the molecular weight of the PLH is preferably less than 50000, more preferably less than 25000, and yet more preferably less than 10000.

"Molecular weight" of the plasticizer herein is a molecular weight derived from a chemical formula, and a molecular weight of 1000 or more refers to a weight-average molecular weight based on standard polystyrene derived from gel permeation chromatography (GPC).

In an embodiment of using a combination of the PLH and the PLL as the plasticizers in the substrate layer, the ratio of the amount of the PLH to the amount of the PLL is not particularly limited. For example, the ratio of the mass of the PLH ($W_{PLH}$) to the mass of the PLL ($W_{PLL}$) in the substrate layer ($W_{PLH}/W_{PLL}$) can be about 0.1 to 500. In view of favorable exertion of an effect of the combination, it is advantageous to set $W_{PLH}/W_{PLL}$ to commonly 0.5 to 100, and preferably 1 to 50. In view of combining heat degradation resistance and other properties (reduction in temporal change of adhesiveness, softness in a wide temperature range, etc.) at higher level, in some preferable embodiments, $W_{PLH}/W_{PLL}$ can be 1 to 25, more preferably 1 to 15 (e.g., 1 to 10), and yet more preferably more than 1 to less than 7 (typically more than 1 to less than 5, e.g., 2 to 4.5).

In the art disclosed herein, the content of the plasticizer (represented by the total amount if two or more species are used) in the substrate layer is selected within the range of 20% by mass or more to less than 36% by mass. In view of abrasion resistance, the content of the plasticizer in the substrate layer is preferably 35% by mass or less, and may be 34% by mass or less or 33% by mass or less (e.g., 32% by mass or less). Reduction in the amount of the plasticizer allows providing desired abrasion resistance even in a configuration including the substrate layer with relatively thin thickness. Additionally, in view of combining with another function, performance, etc. required for a PSA tape (e.g., edge-peel prevention and flexibility), the content of the plasticizer is suitably 22% by mass or more and preferably 24% by mass or more, and may be 26% by mass or more or 27% by mass or more (e.g., 30% by mass or more). The content of the plasticizer can be preferably applied to a substrate layer of a PSA tape used for protection or binding of electric wires of a wire harness.

The content of the plasticizer can also be identified by a relative relation to the PVC in the substrate layer. The content of the plasticizer to 100 mass parts of the PVC (represented by the total amount if two or more species are used) is typically less than 63 mass parts, and in view of abrasion resistance, preferably less than 60 mass parts and more preferably less than 57 mass parts, and may be 54 mass parts or less or 51 mass parts or less. Furthermore, in view of combining with another function, performance, etc. required for a PSA tape (e.g., edge-peel prevention and flexibility), the content of the plasticizer to 100 mass parts of the PVC is typically 28 mass parts or more, preferably 30 mass parts or more, and more preferably 32 mass parts or more, and may be 34 mass parts or more or 36 mass parts or more (e.g., 40 mass parts or more).

(Aliphatic Acid Metal Salt)

The substrate layer in the art disclosed herein preferably contains an aliphatic acid metal salt in addition to the PVC and the plasticizer. In the substrate layer, during processing of the PVC film or the PVC PSA tape or in a use environment of such a PSA tape, the PVC in the PVC film is sometimes exposed to physical energy such as heat, UV rays or shearing force, and turns discolored by a chemical reaction or the like due to the exposure, or diminishes physical, mechanical or electrical properties. Inclusion of an aliphatic acid metal salt in the substrate layer can cause the aliphatic acid metal salt to function as a stabilizer to prevent or inhibit the chemical reaction.

As the aliphatic acid metal salt, solely one species or a combination of two or more species can be used from compounds that can function as a stabilizer for the PVC film. For example, an aliphatic acid forming the aliphatic acid metal salt can be preferably selected from saturated and unsaturated aliphatic acids (possibly hydroxy aliphatic acids) with about 10 to 20 (typically 12 to 18) carbons, such as lauric acid, ricinoleic acid and stearic acid. In view of ease of molding and processing of the PVC film, etc., a stearic acid metal salt can be preferably used. In view of reducing temporal changes of the PVC film or the PVC PSA tape or of their softness at a low temperature, a lauric acid metal salt can be preferably used. In some preferable embodiments, a stearic acid metal salt and a lauric acid metal salt can be used in combination. In such embodiments, the ratio of the amount of the lauric acid metal salt to the amount of the stearic acid metal salt is not particularly limited, but can be, e.g., 0.1 to 10 by mass, and is commonly suitably 0.2 to 5 (e.g., 0.5 to 2).

As a metal forming the aliphatic acid metal salt, a metal other than lead (non-lead metal) is preferably used in view of a recent increased awareness of environmental health. Even in such an embodiment using no lead-containing stabilizer, the art disclosed herein can provide a PVC PSA tape that exhibits good properties. As the metal, a metal element can be exemplary selected among species belonging to Groups 1, 2, 12, 13 and 14 (but excluding Pb) of the periodic table, with favorable examples including Li, Na, Ca, Mg, Zn, Ba and Sn. As the aliphatic acid metal salt, a Ca salt or a Ba salt can be preferably employed in view of cost, ease of availability, etc. Additionally, in view of ease of molding and processing of the PVC film, a Zn salt can be preferably employed. In some preferable embodiments, a Ca salt and a Zn salt can be used in combination. In such embodiments, the ratio of the amount of the Zn salt to the amount of the Ca salt is not particularly limited, but can be, e.g., 0.1 to 10 by mass, and is commonly suitably 0.2 to 5 (e.g., 0.5 to 2). The art disclosed herein can be preferably implemented, e.g., in an embodiment including calcium stearate and zinc laurate at the aforementioned mass ratio or in an embodiment including zinc stearate and calcium laurate at the aforementioned mass ratio. Note that in an application that allows use of an aliphatic acid Pb salt, the PVC film can also contain an aliphatic acid Pb salt.

The amount of the aliphatic acid metal salt is not particularly limited. The content of the aliphatic acid metal salt (represented by the total amount if two or more species are used) in the substrate layer can be, e.g., 0.01% by mass or more, and in view of providing a higher effect, preferably 0.05% by mass or more, and more preferably 0.1% by mass or more. The upper limit of the amount of the aliphatic acid metal salt is not particularly limited, but commonly suitably 10% by mass or less in the substrate layer, and in view of softness at a low temperature etc., preferably 5% by mass or less, and may be 3% by mass or less.

(Antioxidant)

The substrate layer in the art disclosed herein can contain an antioxidant in addition to the PVC and the plasticizer. Inclusion of the antioxidant in the substrate layer can provide a PVC PSA tape having better durability.

As the antioxidant, known materials capable of exerting an antioxidant function can be used without any particular limitation. Examples of the antioxidant include phenol-based antioxidants, phosphorous-based antioxidants, sulfur-based antioxidants and amine-based antioxidants. The antioxidants can be used alone as one species or in combination of two or more species.

Favorable examples of the antioxidant include phenol-based antioxidants such as hindered phenol-based antioxidants. Examples of hindered phenol-based antioxidants include pentaerythritol tetrakis[3-(3,5-di-*tert*-butyl-4-hydroxyphenyl)propionate] (trade name "IRGANOX 1010" manufactured by Ciba Japan K.K. (currently BASF Japan Ltd.; the same applies hereinafter)), octadecyl-3-(3,5-di-*tert*-butyl-4-hydroxyphenyl)propionate (trade name "IRGANOX 1076" manufactured by Ciba Japan K.K.), 4,6-bis(dodecylthiomethyl)-o-cresol (trade name "IRGANOX 1726" manufactured by Ciba Japan K.K.), triethylene glycol bis[3-(3-*tert*-butyl-5-methyl-4-hydroxyphenyl)propionate] (trade name "IRGANOX 245" manufactured by Ciba Japan K.K.), bis(2,2,6,6-tetramethyl-4-piperidyl)sebacate (trade name "TINUVIN 770" manufactured by Ciba Japan K.K.) and a polycondensate of dimethyl succinate and 4-hydroxy-2,2,6,6-tetramethyl-1-piperidineethanol (dimethyl succinate-1-(2-hydroxyethyl)-4-hydroxy-2,2,6,6-tetramethylpiperidine polycondensate) (trade name "TINUVIN 622" manufactured by Ciba Japan K.K.). In particular, pentaerythritol tetrakis[3-(3,5-di-*tert*-butyl-4-hydroxyphenyl)propionate] (trade name "IRGANOX 1010" manufactured by Ciba Japan K.K.), triethylene glycol bis[3-(3-*tert*-butyl-5-methyl-4-hydroxyphenyl)propionate] (trade name "IRGANOX 245" manufactured by Ciba Japan K.K.) and the like are preferable.

The content of the antioxidant (represented by the total amount if two or more species are used) is not particularly limited, and can be, e.g., 0.001% by mass or more in the substrate layer. In view of providing a higher effect, the amount of the antioxidant in the substrate layer is commonly favorably 0.01% by mass or more, preferably 0.05% by mass or more, and more preferably 0.1% by mass or more. The upper limit of the amount of the antioxidant is not particularly limited, but is commonly preferably 10% by mass or less.

(Filler)

The substrate layer disclosed herein can be contain one species or two or more species of various fillers as appropriate. In a configuration including the substrate layer containing a filler, the art disclosed herein can preferably achieve desired abrasion resistance. As the filler, any of an organic filler, an inorganic filler, and an organic-inorganic composite filler can be used. The filler may undergo a known or commonly-used surface treatment. In view of cost and availability, an inorganic filler was preferably used.

Examples of the filler include aluminum hydroxide, magnesium hydroxide, zirconium hydroxide, calcium hydroxide, potassium hydroxide, barium hydroxide, triphenyl phosphate, ammonium polyphosphate, amide polyphosphate, zirconium oxide, magnesium oxide, zinc oxide, titanium oxide, molybdenum oxide, guanidine phosphate, hydrotalcite, snaketite, zeolite, zinc borate, zinc borate anhydride, zinc metaborate, barium metaborate, antimony oxide, antimony trioxide, antimony pentaoxide, red phosphorus, talc, alumina, silica, boehmite, bentonite, silicate soda, calcium silicate, calcium sulfate, calcium carbonate, magnesium carbonate and carbon black. In particular, more preferable are hydrotalcite, talc, alumina, silica, calcium silicate, calcium sulfate, calcium carbonate and magnesium carbonate, and more preferable is calcium carbonate.

As the surface-treated filler, various fillers as specifically exemplified can be surface-treated and used. For example, an inorganic compound surface-treated with a silane coupling agent can be preferably used. As the inorganic compound, one or two or more of known or commonly-used materials can be used to serve as an inorganic frame retardant(s), and examples thereof to be used can include the inorganic compounds (e.g., magnesium hydroxide, aluminum hydroxide, basic magnesium carbonate, calcium carbonate, hydrotalcite) among specific examples of the fillers listed above.

The silane coupling agent used for the surface treatment is a silane compound having a structure where an organic functional group having affinity or reactivity with an organic resin is chemically bound to a hydrolysable silyl group having affinity or reactivity with an inorganic material. A hydrolysable group bound to silicon is an alkoxy group, an acetoxy group or the like. Typical examples of the alkoxy group include a methoxy group and an ethoxy group. Examples of the organic functional group include an amino group, a methacryl group, a vinyl group, an epoxy group, and a mercapto group. Specific examples of the silane coupling agent include vinyl triethoxysilane, vinyl-tolyl(2-methoxyethoxy)silane, $\gamma$-methacryloxypropyl trimethoxysilane, $\gamma$-aminopropyl trimethoxysilane, $\gamma$-aminopropyl triethoxysilane, $N$-phenyl-$\gamma$-aminopropyl trimethoxysilane, $N$-$\beta$-(aminoethyl)-$\gamma$-aminopropyl trimethoxysilane, $N$-$\beta$-(aminoethyl)-$\gamma$-aminopropyl triethoxysilane, $N$-phenyl-$\gamma$-aminopropyl triethoxysilane, $\beta$-(3,4-epoxycyclohexyl)ethyltrimethoxysilane, $\gamma$-glysidoxy propyltrimethoxysilane and $\gamma$-mercapto propyltrimethoxysilane, and these can be used alone as one species or in combination of two or more species.

A method of the surface treatment of the inorganic compound with the silane coupling agent is not particularly limited, and can be a common method such as dry processing or wet processing. The amount of the silane coupling agent attached to the surface of the inorganic compound can vary corresponding to the type of the coupling agent, the type of the inorganic compound, and specific surface area, and is not limited to a particular range, but is commonly within the range of 0.1 to 5.0% by mass, and preferably 0.3 to 3.0% by mass relative to the inorganic compound.

The particle diameter of the filler or the particle diameter of the inorganic compound to be surface-treated is not particularly limited, commonly about 0.1 $\mu$m or more to 50 $\mu$m or less, and preferably about 0.5 to 20 $\mu$m. Such a particle diameter is a particle diameter measured by laser diffraction.

In an embodiment where the substrate layer contains the filler, the content of the filler in the substrate layer is appropriately set in the range so as not to diminish an effect by the art disclosed herein, and is not limited to a specific range. The content of the filler in the substrate layer may be, e.g., 1% by mass or more, 3% by mass or more, or 5% by mass or more. The upper limit of the content of the filler is commonly suitably 15% by mass or less, may be, e.g., 12% by mass or less, 10% by mass or less, or 8% by mass or less (e.g., 6.5% by mass or less). The art disclosed herein can be implemented even in an embodiment not substantially contain the filler.

The art disclosed herein is also preferably implemented in an embodiment where the substrate layer contains at least one of hydrotalcite, talc, alumina, silica, calcium silicate, calcium sulfate, calcium carbonate and magnesium carbonate (hereinafter also referred to as "favorable inorganic filler group"; more favorably calcium carbonate) as the filler. In such an embodiment, the content of a filler in the substrate layer other than the favorable inorganic filler group may be, e.g., less than 100% by mass relative to 100% by mass of the favorable inorganic filler group. Thecontent of a filler other than the favorable inorganic filler group may be approximately 50% by mass or less, 10% by mass or less, or 1% by mass or less relative to 100% by mass of the favorable inorganic filler group. The art disclosed herein can be implemented in an embodiment including the substrate layer containing no filler other than the favorable inorganic filler group.

(Elastomer)

The substrate layer used in the art disclosed herein may or may not contain an elastomer for the purpose of improving softness, mechanical strength, etc. In some embodiments, the substrate layer contains an elastomer. Use of an elastomer improves softness and thus enables reduction in the amount of the plasticizer. The capability of reducing the amount of the plasticizer can be an effective way to prevent occurrence of bleeding e.g., at a risk of potential occurrence of bleeding of the plasticizer. Examples of the elastomer to be used include chlorinated polyethylene (CPE), ethylene-vinyl acetate copolymer, (meth)acrylate ester-butadiene-styrene copolymer (e.g., methyl methacrylate-butadiene-styrene copolymer), acrylonitrile-butadiene-styrene copolymer, acrylonitrile-butadiene copolymer (NBR), styrene-butadiene copolymer, styrene-butadiene-styrene copolymer, chlorosulfonated polyethylene (CSM), thermoplastic polyester-based elastomer (TPEE), thermoplastic polyurethane (TPU), other synthetic rubbers (isoprene rubber, butadiene rubber, etc.), and composites or modified products thereof. Examples of the thermoplastic polyurethane include polyether-based thermoplastic polyurethane, polyester-based thermoplastic polyurethane, and polycarbonate-based thermoplastic polyurethane. The elastomers can be used alone as one species or in combination of two more species.

Furthermore, inclusion of an appropriate amount of the elastomer in the substrate layer allows more improvement in an abrasive resistance value, and can cause exertion of better abrasion resistance. Favorable examples of the elastomers to be used for such a purpose include thermoplastic polyurethane elastomers. Use of a thermoplastic polyurethane elastomer facilitates providing sufficient abrasion resistance even in a configuration having the substrate layer with a thickness limited to a predetermined value or less (e.g., less than 190 $\mu$m, more preferably 160 $\mu$m or less). Without wishing to be bound by any particular theory, one reason thereof may be because the thermoplastic polyurethane elastomer has a hard segment and a soft segment, and stress absorbing action from the soft segment and elasticity recovering action based on intermolecular cohesion force from the hard segment are combined to contribute to improved abrasiveness. As the thermoplastic polyurethane elastomer, any of polyether-based TPU, polyester-based TPU, and polycarbonate-based TPU can be used, and in particular, polyester-based TPU and polycarbonate-based TPU are preferable, and polyester-based TPU is particularly preferable.

In some embodiments, the amount of the elastomer in the substrate layer is typically less than 50% by mass, and may be, e.g., 40% by mass or less or 30% by mass or less. In some embodiments, the content of the elastomer in the substrate layer is less than 20% by mass, and may be less than 15% by mass. In a configuration with a limited amount of the elastomer for use in the substrate layer, the art disclosed herein can achieve a desired effect. Limitation of the amount of the elastomer causes more compatibility of the elastomer with PVC, and can lead to effective exertion of an effect of inclusion of the elastomer (e.g., an effect to improve abrasion resistance). The content of the elastomer in the substrate layer may be, e.g., less than 10% by mass, less than 8% by mass, less than 5% by mass, or less than 2% by mass (e.g., less than 1% by mass). In some preferable embodiments, the content of the elastomer in the substrate layer may be 1% by mass or more, 3% by mass or more, or 5% by mass or more. Increase in the amount of the elastomer tends to lead to more exertion of an effect of inclusion of the elastomer (e.g., an effect to improve abrasion resistance).

(Optional additives)

The substrate layer in the art disclosed herein can further contain, as necessary, a known additive that can be used in a PVC film (especially in a PVC film for PVC PSA tapes) as far as an effect of the present invention is not significantly impaired. Examples of such an additive include colorants such as pigments and dyes, stabilizers other than aliphatic acid metal salts (e.g. organic tin compounds such as dioctyltin laurate), auxiliary stabilizers (e.g. phosphites such as trialkyl phosphite), photostabilizers, UV-ray absorbers, modifiers, flame retardants, antistatic agents, antifungal agents and lubricants.

In the substrate layer according to some preferable embodiments, the content of a component other than the polyvinyl chloride and the plasticizer is less than 15% by mass. This causes tendency to preferably exhibit an effect of selection of the amount of the plasticizer relative to the PVC. The content of a component other than the polyvinyl chloride and the plasticizer in the substrate layer may be less than 12% by mass, less than 10% by mass, or less than 8% by mass. The lower limit of the content of a component other than the polyvinyl chloride and the plasticizer in the substrate layer is not particularly limited; in view of favorably exerting an effect of inclusion of an additive, it is suitably 1% by mass or more, and may be 3% by mass or more or 5% by mass or more (e.g., 7% by mass or more).

The PVC film having such a composition can be produced typically by molding a PVC composition having corresponding composition into a film form by a method known in the field of thermoplastic resin film. Example of such a known molding method to be employed can include melt-extrusion molding (inflation, T-die molding, etc.), melt casting, and calendaring. The art disclosed herein can also be preferably implemented in an embodiment using, as the PVC films, a film that has not been subjected to treatment to purposefully increase crosslinking throughout the PVC film, such as addition of a crosslinking agent or irradiation of active energy rays. Such a PVC film tends to facilitate production of a PVC PSA tape having high softness that can retain a function, performance, etc. required for a PSA tape (e.g., edge peel and flexibility).

As an example, a typical procedure for making a film by calendaring will be outlined below.

(1) Measuring: PVC, a plasticizer and another material used as necessary are weighed out in accordance with target composition.
(2) Mixing: The respective weighed materials are stirred and mixed to prepare a uniform mixture (typically a powdered mixture, i.e. mixed powder).
(3) Kneading: The mixture prepared in the item (2) is melted by heat and kneaded with two, three or more kneading rollers (typically metal rollers). The temperature of the kneading rollers is favorably set, e.g., to 100°C to 250°C (preferably 150°C to 200 °C).
(4) Calendar molding: The kneaded mixture thus obtained in the item (3) is charged in a calendar molding machine to mold a PVC film having a desired thickness.

In the PSA tape disclosed herein, the substrate layer is typically a monolayer or multilayer support substrate formed from a PVC film. The PSA tape may also be configured including another layer in addition to the substrate layer formed from a PVC film. In some embodiments, the other layer may be an auxiliary layer, such as a print layer, a release-treated layer, or a primer layer, disposed on a surface of the PVC film. As some preferable embodiments, a configuration can be exemplified where a PSA layer is disposed on a single side of the substrate layer formed from a monolayer PVC film. Such a PSA tape may have a configuration including a PSA layer disposed directly on the substrate layer formed from a PVC film, and take a form no auxiliary layer, such as a print layer, a release-treated layer, or a primer layer described above, between the substrate layer and the PSA layer.

The thickness of the substrate layer is selected within the range of more than 115 μm to less than 400 μm. In view of abrasion resistance, the thickness of the substrate layer is suitably 130 μm or more, preferably 140 μm or more, more preferably 150 μm or more, yet more preferably 160 μm or more, and particularly preferably 170 μm or more. In view of retaining a function, performance, etc. required for a PSA tape (e.g., edge-peel prevention and flexibility), the upper limit of the thickness of the substrate layer is less than 400 μm, and may be e.g., less than 350 μm, less than 300 μm, less than 250 μm, or less than 220 μm. Limitation of the thickness of the substrate layer can also achieve weight reduction. In some embodiments, the thickness of the substrate layer is less than 200 μm, and may be e.g., less than 190 μm. Even in such a configuration having a limited thickness of the substrate layer, the art disclosed herein can achieve high abrasion resistance. The thickness of the substrate layer can be preferably applied to a PSA tape to be used for protection or binding of electric wires of a wire harness.

In the substrate layer, a surface onto which the PSA layer is disposed may be subjected to hitherto known surface treatment such as corona discharge treatment, plasma treatment, UV-ray irradiation treatment, acid treatment, alkali treatment, primer coating or antistatic treatment, as appropriate. These surface treatments may be provided to improve adhesion between the substrate layer and a PSA layer, that is, anchoring of the PSA layer to the substrate layer. The primer composition is not particularly limited and can be suitably selected from known compositions. The thickness of the primer layer is not particularly limited, but is commonly preferably 0.01 μm or more to 2 μm or less, and more preferably 0.1 μm or more to 1 μm or less.

In a PVC PSA tape having a configuration including a PSA layer disposed solely on one side of the substrate layer, the other side having no PSA layer (back side) may be subjected to hitherto known surface treatment such as release treatment or antistatic treatment, as appropriate. For example, the back side of the substrate may have a release-treated layer such as a long-chain alkyl-based or silicone-based release layer, thereby reducing unwinding force of the PVC PSA tape wound in a roll. Furthermore, for the purposes of improving printability, reducing light reflection and improving ease of pasting in layers, the back side may be subjected to treatment such as corona discharge treatment, plasma treatment, UV-ray irradiation treatment, acid treatment or alkali treatment.

<PSA Layer>

The PSA layer in the art disclosed herein is a layer formed from a material that typically exhibits a soft solid (viscoelastic material) state in a room temperature range and has a property to adhere easily to an adherend with pressure applied. The PSA referred to herein is generally a material that has a property of satisfying complex tensile modulus $E^*$ (1Hz) < $10^7$ dyne/cm$^2$ (typically, a material that has this property at 25°C), as defined in C. A. Dahlquist, "Adhesion: Fundamental and Practice", McLaren & Sons (1966), P. 143,

The PSA layer in the art disclosed herein may be a PSA layer formed from a PSA composition in various forms, such as a water-dispersed PSA composition, an aqueous PSA composition, a solvent-based PSA composition, a hot-melt PSA composition and an active energy ray-curing PSA composition. The term "active energy ray" herein refers to an energy ray having energy capable of causing a chemical reaction such as polymerization, crosslinking or initiator decomposition, and represents a concept that encompasses light such as UV rays, visible light and infrared light, as well as radioactive rays such as α rays, β rays, γ rays, electron rays, neutron rays and X rays. A PSA layer formed from a water-dispersed PSA composition is preferable because it facilitates reduction in transfer of the plasticizer in the PVC film to the PSA layer and inhibition of temporal changes in adhesive strength, etc.

(Base Polymer)

The type of PSA forming the PSA layer is not particularly limited. The PSA may contain, as a base polymer (a primary component among polymer components), one species or two or more species of various rubbery polymers known in the field of PSA, such as rubber-based polymers, acrylic polymers, polyester-based polymers, urethane-based polymers, polyether-based polymers, silicone-based polymers, polyamide-based polymers and fluorine-based polymers. The rubber-based PSA herein refers to a PSA that contains a rubber-based polymer as a base polymer. The same applies to acrylic PSAs and other PSAs. An acrylic polymer refers to a polymer that contains a monomer unit derived from a monomer having at least one (meth)acryloyl group per molecule (an acrylic monomer) and typically refers to a polymer that contains a monomer unit derived from an acrylic monomer at an amount above 50 % by mass. The (meth)acryloyl group comprehensively refers to acryloyl groups and methacryloyl groups.

(Rubber-based Polymer)

As the PSA layer of the PVC PSA tape disclosed herein, a PSA layer containing a rubber-based PSA as a primary component (a rubber-based PSA layer) can be preferably employed. The rubber-based PSA may contain one species or two or more species of rubber-based polymers selected from natural rubbers and synthetic rubbers. The "primary component" herein refers to a component that accounts for more than 50 % by mass unless otherwise indicated. As the rubber-based polymer, either natural rubber or synthetic rubber can be used. As the natural rubber, a known material usable in a PSA composition can be used without particular limitations. The natural rubber referred to herein is not limited to unmodified natural rubbers, and represents a concept encompassing modified natural rubbers modified with, e.g., acrylate ester. Unmodified natural rubber and modified natural rubber may be used together. As the synthetic rubber, a known material usable in a PSA composition can be used without particular limitations. Favorable examples include styrene-butadiene rubber (SBR), styrene-isoprene rubber and chloroprene rubber. These synthetic rubbers can be unmodified or modified (e.g. carboxy-modified). The rubber-based polymers can be used alone as one species or in combination of two or more species.

The PVC PSA tape according to some preferable embodiments has a rubber-based PSA layer formed from a water-dispersed rubber-based PSA composition derived by adding a tackifier resin and another additive to rubber-based latex as appropriate. The rubber-based latex can be a water dispersion of various known rubber-based polymers. Either natural rubber latex or synthetic rubber latex can be used. As the natural rubber latex, a known material usable in a PSA composition can be used without particular limitations. The natural rubber latex referred to herein is not limited to unmodified natural rubber latex, and represents a concept encompassing modified natural rubber latex modified with, e.g., an acrylate ester, etc. Unmodified natural rubber latex and modified natural rubber latex may be used together. As the synthetic rubber latex, a known material usable in a PSA composition can be used without particular limitations. Favorable examples include styrene-butadiene rubber latex (SBR latex), styrene-isoprene rubber latex and chloroprene rubber latex. The synthetic rubber in the synthetic rubber latex can be unmodified or modified (e.g. carboxy-modified). The rubber-based latex can be used alone as one species or in combination of two or more species.

The rubber-based PSA composition (e.g. water-dispersed, rubber-based PSA composition) according to some preferable embodiments contains both natural rubber and synthetic rubber as the rubber-based polymers. With such a PSA composition, the PVC PSA tape can be formed to exhibit good adhesive properties. For example, the PVC PSA tape can be formed to exhibit adhesive properties suited for applications such as protection or binding of electric wires, pipes and the like, covering of a corrugated tube as described above, and electric insulation. The mass ratio of natural rubber to synthetic rubber (natural rubber: synthetic rubber) falls preferably within a range of approximately 10:90 to 90:10, more preferably within a range of approximately 20:80 to 80:20, or yet more preferably within a range of approximately 30:70 to 70:30. As the synthetic rubber, SBR can be preferably employed.

(Acrylic Polymer)

In another preferable embodiment, as the PSA layer, a PSA layer primarily containing an acrylic PSA (acrylic PSA layer) can be employed. An acrylic PSA facilitates production of a PSA tape having excellent heat resistance. As the acrylic polymer contained in the acrylic PSA, (meth)acrylate ester-based polymer containing (meth) acrylate ester (acrylate ester, methacrylate ester) as a primary monomer component can be used. The acrylic polymer used in an acrylic PSA preferably take a form of an emulsified acrylic polymer (acrylic polymer emulsion).

As the acrylic polymer, alkyl (meth)acrylate ester-based polymer containing alkyl (meth)acrylate ester as a primary monomer component can be particularly preferably used. The alkyl (meth)acrylate ester-based polymer may be a polymer build up with solely one species of alkyl (meth)acrylate ester (homopolymer), or may be a copolymer of alkyl (meth)acrylate ester with another (meth)acrylate ester, such as cycloalkyl (meth)acrylate ester or aryl (meth)acrylate ester, or a monomer capable of copolymerization with alkyl (meth)acrylate ester (copolymeric monomer). That is, in alkyl (meth)acrylate ester-based polymer, monomer components such as alkyl (meth)acrylate ester can be used alone or in combination of two or more species.

Examples of the alkyl (meth)acrylate ester in the acrylic polymer include $C_{1-20}$ alkyl (meth)acrylate esters such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. In particular, $C_{2-14}$ alkyl (meth)acrylate ester is preferable, and $C_{2-10}$ alkyl (meth)acrylate ester is more preferable. As the alkyl (meth)acrylate ester, butyl (meth)acrylate and 2-ethylhexyl (meth)acrylate are particularly favorable. Note that the notation of "$C_{X-Y}$" such as "$C_{1-20}$" represents inclusion of X or more to Y or less carbons; $C_{X-Y}$ alkyl (meth)acrylate ester refers to alkyl (meth)acrylate ester having an alkyl group with X or more to Y or less carbons at the end of an ester moiety.

The (meth)acrylate ester is used as a primary monomer component. The amount of (meth)acrylate ester (particularly, alkyl (meth)acrylate ester) is typically 50% by mass or more relative to the total amount of monomer components, and in view of adhesion and cohesion, preferably 80% by mass or more, and more preferably 90% by mass or more.

In the acrylic polymer, examples of the copolymeric monomer capable of copolymerization with alkyl (meth)acrylate ester include carboxy group-containing monomers such as (meth)acrylic acid (acrylic acid, methacrylic acid), itaconic acid, maleic acid, fumaric acid and crotonic acid; acid anhydride group-containing monomers such as maleic anhydride and itaconic anhydride; cyanoacrylate-based monomers such as acrylonitrile and methacrylonitrile; aminoalkyl (meth)acrylate-based monomers such as aminoethyl (meth)acrylate, *N,N*-dimetliylatninoethyl (meth)acrylate and *t*-butylaminoethyl (meth)acrylate; (*N*-substituted) amide-based monomers such as (meth)acrylamide, *N,N*-dimethyl (meth)acrylamide, *N*-butyl (meth)acrylamide, *N*-hydroxy (meth)acrylamide, *N*-methylol (meth)acrylamide and *N,N*-dimethylarninopropyl (meth)acrylamide; vinyl ester-based monomers such as vinyl acetate and vinyl propionate; styrene-based monomers such as styrene, $\alpha$-methylstyrene and vinyl toluene; hydroxyl group-containing monomers such as 2-hydroxyethyl (meth)acrylate, 3-hydroxypropyl (meth)acrylate and 4-hydroxybutyl (meth)acrylate; epoxy group-containing acrylic monomers such as glycidyl (meth)acrylate; alkoxy alkyl (meth)acrylate-based monomers such as methoxyethyl (meth)acrylate and ethoxyethyl (meth)acrylate; lactone acrylate-based monomers such as $\varepsilon$-caprolactone acrylate; olefin-based monomers such as ethylene, propylene, isoprere and butadiene; vinyl ether-based monomers such as methylvinyl ether and ethylvinyl ether; and heterocycle-containing vinyl-based monomers such as morpholino (meth)acrylate; *N*-vinyl-2-pyrroridone, *N*-vinylpyridine, *N*-vinylpiperidone, *N*-vinylpyrimidine, *N*-vinylpiperazine, *N*-vinylpyrazine, *N*-vinylpyrrole, *N*-vinylimidazole, and *N*-vinyloxazole. The copolymeric monomers can be used alone as one species or in combination of two or more species. Favorable examples of the copolymeric monomer include carboxy group-containing monomers (in particular, acrylic acid and/or methacrylic acid).

Additionally, in the acrylic polymer, the copolymeric monomer to be used may be a polyfunctional monomer such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, urethane acrylate, divinylbenzene, butyl di(meth)acrylate or hexyl di(meth)acrylate.

A polymerization method of the acrylic polymer is not particularly limited, and can appropriately employ various polymerization methods known hitherto. Examples of the polymerization method to be appropriately employed can be thermal polymerization such as solution polymerization, emulsion polymerization, and mass polymerization (typically performed in presence of a heat polymerization initiator); light polymerization with irradiation of light such as UV rays (typically performed in presence of a light polymerization initiator); and radiation polymerization with irradiation of radioactive rays such as $\beta$ rays or $\gamma$ rays. Two or more of the polymerization methods can be combined and performed (e.g., step by step).

When the acrylic polymer forming an acrylic PSA is an emulsified acrylic polymer, the emulsified acrylic polymer may be derived by emulsifying an acrylic polymer prepared by a polymerization method other than emulsion polymerization (solution polymerization, etc.) with use of an emulsifier as appropriate, but preferably uses an acrylic polymer prepared by emulsion polymerization.

Examples of polymerization systems for the acrylic polymer include a common bulk polymerization system, a continuous dropping polymerization system and a divided dropping polymerization system, any of which can be employed, and a plurality of the polymerization systems may be combined. In addition, a polymerization reaction may be carried out step by step; for example, once polymerization is performed, a monomer component may then be added to perform polymerization.

When the acrylic polymer is prepared by emulsion polymerization, one species or combined two or more species of known emulsifiers can be used in polymerization. In particular, as the emulsifier, preferably used is a reactive emulsifier having a group capable of copolymerization for (meth)acrylic acid ester (e.g., a group containing an ethylenic unsaturated bond moiety). The reactive emulsifier is bound to a molecular chain (particularly, a molecular chain in an acrylic polymer) in the PSA composition, thus reducing or preventing deposition or transfer of the emulsifier on a surface of a PSA layer, and thereby effectively reducing or preventing decrease in adhesiveness, contamination of an adherend with the emulsifier, etc. Accordingly, the emulsified acrylic polymer used in the art disclosed herein is preferably prepared by emulsion polymerization of a monomer component in presence of the reactive emulsifier.

The reactive emulsifier only needs to have an emulsification function and also to contain a group capable of copolymerization for (meth)acrylate ester, and examples thereof include reactive emulsifiers having (or corresponding to) a form where a radical polymerizable functional group (radical reactive group) such as a propenyl group or an allyl ether group is introduced into an emulsifier as listed below: an anionic emulsifier such as sodium lauryl sulfate, ammonium lauryl sulfate, sodium dodecylbenzene sulfonate, sodium polyoxyethylene alkyl ether sulfonate, ammonium polyoxyethylene alkyl phenyl ether sulfonate, sodium polyoxyethylene alkyl phenyl ether sulfonate, or sodium polyoxyethylene alkyl sulfosuccinate; a nonionic emulsifier such as polyoxyethylene alkyl ether, polyoxyethylene alkyl phenyl ether, polyoxyethylene aliphatic acid ester, or a polyoxyethylene polyoxypropylene block polymer; or a nonionic-anionic emulsifier such as sodium polyoxyethylene alkyl ether sulfonate, ammonium polyoxyethylene alkyl phenyl ether sulfonate, sodium polyoxyethylene alkyl phenyl ether sulfonate, or sodium polyoxyethylene alkyl sulfosuccinate. The reactive emulsifiers can be used alone as one species or in combination two or more species.

In addition, an emulsifier other than the reactive emulsifier (non-reactive emulsifier) is not particularly limited, and can be appropriately selected from known emulsifiers. Specific examples of the non-reactive emulsifier include anionic emulsifiers such as sodium lauryl sulfate, ammonium lauryl sulfate, sodium dodecylbenzene sulfonate, sodium polyoxyethylene alkyl ether sulfonate, ammonium polyoxyethylene alkyl phenylether sulfonate, sodium polyoxyethylene alkyl phenylether sulfonate, and sodium polyoxyethylene alkyl sulfosuccinate; nonionic emulsifiers such as polyoxyethylene alkyl ether, polyoxyethylene alkyl phenyl ether, polyoxyethylene aliphatic acid ester, and a polyoxyethylene polyoxypropylene block polymer; and nonionic-anionic emulsifiers such as sodium polyoxyethylene alkyl ether sulfonate, ammonium polyoxyethylene alkyl phenyl ether sulfonate, sodium polyoxyethylene alkyl phenyl ether sulfonate, and sodium polyoxyethylene alkyl sulfosuccinate. These non-reactive emulsifiers can be used alone as one species or in combination of two or more species.

The amount of the emulsifier (particularly a reactive emulsifier) is appropriately selected depending on an emulsion and thus is not limited to a specific range, but is commonly suitably 0.1 to 20 mass parts (preferably 1 to 10 mass parts) relative to 100 mass parts of a monomer mixture.

In polymerization for producing the acrylic polymer (favorably, an emulsified acrylic polymer), a polymerization initiator, a chain transfer agent, or another agent can be used. The polymerization initiator, the chain transfer agent, or the other agent is not to limited particularly, and can be appropriately selected and used from known agents. Examples of the polymerization initiator include azo-based polymerization initiators such as 2,2'-azobisisobutylonitrile, 2,2'-azobis(2-methylpropionamidine) disulfide, 2,2'-azobis (4-methoxy-2,4-dimethylvaleronitrile), 2,2'-azobis(2,4-dimethylvaleronitrile), 2,2'-azobis(2-methylbutylonitrile), 1,1'-azobis(cyclohexane-1-carbonitrile), 2,2'-azobis(2,4,4-trimethylpentane), dimethyl-2,2'-azobis(2-methylpropionate), 2,2'-azobis[2-methyl-N-(phenyhnethyl)-propionamidine] dihydrochloride, 2,2'-azobis[2-(3,4,5,6-tetrahydropirimidine-2-yl)propane] dihydrochloride, and 2,2'-azobis [2-(2-imidazoline-2-yl)propane]; persulfate salt-based polymerization initiators such as potassium persulfate and ammonium persulfate; peroxide-based polymerization initiators such as benzoyl peroxide, hydrogen peroxide, t-butyl hydroperoxide, di-t-butyl peroxide, t-butylperoxy benzoate, dicumyl peroxide, 1,1-bis (t-butylperoxy)- 3,3,5-trimethylcyclohexane, 1,1-bis (t-butylperoxy) cyclododecane, 3,3,5-trimethylcyclohexanoyl peroxide, and t-butylperoxy pivalate; and redox-based polymerization initiators formed from a persulfate salt and sodium hydrogen sulfite. The polymerization initiators can be used alone as one species or in combination of two or more species. The amount of the polymerization initiator is not particularly limited, and is appropriately selected depending on a polymerization method or a polymerization reactivity, the type and amount of a monomer component, the type of the polymerization initiator, and the like; for example, it can be appropriately selected within the range of 0.005 to 1 mass part relative to 100 mass parts of a monomer mixture.

As the chain transfer agent, one species or two or more species can be selected and used from, e.g., lauryl mercaptane, glycidyl mercaptane, mercapto acetic acid, 2-mercapto ethanol, thioglycolic acid, 2-ethylhexyl thioglycolate, and 2,3-dimethylcapto-1-propanol.

(Tackifier Resin)

The PSA layer (e.g., a rubber-based PSA layer and an acrylic PSA layer) in the art disclosed herein may contain a tackifier resin in addition to the base polymer as described above. As the tackifier resin, a suitable species can be selected and used from various known tackifier resins. For example, one species or two or more species can be selected and used from various tackifier resins including rosin-based resins, petroleum-based resins, terpene-based resins, phenol-based resins, coumarone-indene-based resins and ketone-based resins. In an embodiment of forming the PSA layer from a water-dispersed PSA composition (favorably, a water-dispersed rubber-based PSA composition), a tackifier resin emulsion is preferably used as tackifier resin.

Examples of rosin-based resins include rosin derivatives such as disproportionated rosins, hydrogenated rosins, polymerized rosins, maleinated rosins and fumarated rosins as well as phenol-modified rosins and rosin esters. Examples of phenol-modified rosins include a product of an addition reaction of a phenolic compound to a natural rosin or rosin derivative, and a phenol-modified rosin produced by a reaction of a resolic phenol resin to a natural rosin or rosin derivative. Examples of rosin esters include an esterified product by a reaction of the rosin-based resin with polyhydric alcohol. Rosin-phenol resins can also be esterified.

Examples of terpene-based resins include terpene resins ($\alpha$-pinene resins, $\beta$-pinene resins, limonene resins, etc.), terpene phenol resins, aromatic modified terpene resins and hydrogenated terpene resins.

Examples of petroleum-based resins include aliphatic (C5) petroleum resins, aromatic (C9) petroleum resins, aliphatic/aromatic copolymer-based (C5/C9) petroleum resins, hydrogenated products thereof (e.g. an alicyclic petroleum resin produced by hydrogenating an aromatic petroleum resin) and various modified products thereof (e.g. maleic anhydride modified product).

Examples of phenol-based resins include condensation products of formaldehyde and various phenolic compounds such as phenol, m-cresol, 3,5-xylenol, p-alkylphenol and resorcinol. Other examples of phenol-based resins include resoles produced by an addition reaction of the phenolic compound and formaldehyde in presence of an alkali-catalyst, and novolacs produced by a condensation reaction of the phenolic compound and formaldehyde in presence of an acid-catalyst.

Examples of coumarone-indene-based resins include coumarone-indene resins, hydrogenated coumarone-indene resins, phenol-modified coumarone-indene resins and epoxy-modified coumarone-indene resins.

Examples of ketone resins include ketone resins formed by condensation of formaldehyde and ketones (e.g. aliphatic ketones such as methyl ethyl ketone, methyl isobutyl ketone and acetophenone; and alicyclic ketones such as cyclohexanone and methyl cyclohexanone).

In some preferable embodiments (e.g., an embodiment using a rubber-based PSA), a petroleum-based resin (preferably, aliphatic-based (C5) petroleum resin) and a phenol-based resin (preferably, alkyl phenol resin) are combined and used as the tackifier resin. In such an embodiment, the ratio of the usage of both is not particularly limited. For example, the ratio of the content B of the petroleum-based resin to the content A of the phenol-based resin (B/A) can be 1 or more, preferably 2 or more, more preferably 2.5 or more, and further, suitably 15 or less, and preferably 9 or less. In other some embodiments (e.g., an embodiment using an acrylic PSA), a rosin-based resin is preferably used as a tackifier resin.

The softening temperature of the tackifier resin used is not particularly limited. In some embodiments (e.g., an embodiment using a rubber-based PSA), for example, a tackifier resin having a softening point of 60°C to 160°C can be used. A tackifier resin that takes a liquid form at room temperature can also be used. In view of combining cohesion force and low-temperature properties (e.g. unwinding force and adhesiveness at low temperatures) with good balance, a tackifier resin having a softening point of 60°C to 140°C (more preferably 80°C to 120°C) can be preferably used. For example, a petroleum-based resin having a softening point in this range is preferably used. In other some embodiments (e.g., an embodiment using an acrylic PSA), a tackifier resin having a softening point of approximately 200°C or lower (more preferably, approximately 180°C or lower) can be preferably used. The lower limit of the softening point of such a tackifier resin is not particularly limited, and may be e.g., approximately 135°C or higher (further, approximately 140°C or higher). The softening point of a tackifier resin can be measured based on the method for a softening point test specified in JIS K2207 (ring and ball method).

The ratio of polymer components to the tackifier resin in the PSA layer is not particularly limited and can be appropriately determined in accordance with the application. In some embodiments, the amount of the tackifier resin relative to 100 mass parts of polymer components can be, e.g., about 20 mass parts or more based on non-volatiles, and commonly suitably about 50 mass parts or more. In view of providing more effect of use, the amount of the tackifier resin relative to 100 mass parts of polymer components can be 80 mass parts or more, or may be 100 mass parts or more. Meanwhile, in view of the low-temperature properties, etc., the amount of the tackifier resin relative to 100 mass parts of polymer components is suitably about 200 mass parts or less, or preferably 150 mass parts or less. In other some embodiments, the amount of the tackifier resin can be appropriately set within the range of, e.g., 1 to 100 mass parts relative to 100 mass parts of the base polymer (favorably, an acrylic polymer). In view of cohesion force, the amount of the tackifier resin relative to 100 mass parts of the base polymer (favorably, an acrylic polymer) is suitably 50 mass parts or less, and may be 20 mass parts or less or 10 mass parts or less.

(Crosslinking Agent)

In the art disclosed herein, the PSA composition used for formation of a PSA layer may contain a crosslinking agent as appropriate. The type of the crosslinking agent is not particularly limited, and can be selected and used from hitherto known crosslinking agents. Examples of such a crosslinking agent include isocyanate-based crosslinking agents, epoxy-based crosslinking agents, oxazoline-based crosslinking agents, aziridine-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, carbodiimide-based crosslinking agents, hydrazine-based crosslinking agents, amine-based crosslinking agents, and silane coupling agents. In particular, preferable are isocyanate-based crosslinking agents, epoxy-based crosslinking agents, oxazoline-based crosslinking agents, aziridine-based crosslinking agents, and melamine-based crosslinking agents; more preferable are isocyanate-based crosslinking agents and epoxy-based crosslinking agents; and particularly preferable are epoxy-based crosslinking agents. The crosslinking agents can be used alone as one species or in combination of two or more species.

The amount of the crosslinking agent is not particularly limited. For example, the amount can be approximately 10 mass parts or less relative to 100 mass parts of the base polymer (favorably, an acrylic polymer), and can be selected within the range of preferably approximately 0.005 to 10 mass parts, and more preferably approximately 0.01 to 5 mass parts.

(Other Additives)

In an embodiment using a water-dispersed PSA composition as the PSA composition, a protective colloid such as a water-soluble salt of casein is preferably used for the water-dispersed PSA composition in view of insulation properties, moisture resistance, etc.

As for other components, the PSA layer may contain, as appropriately, various additives generally used in the PSA field, such as a viscosity modifier (thickener, etc.), a leveling agent, a plasticizer, a softener, a filler, a colorant such as a pigment or a dye, a photostabilizer, an anti-aging agent, an antioxidant, a waterproofing agent, an antistatic agent, a foaming agent, an anti-foaming agent, a surfactant and a preservative.

The PSA layer can be formed by appropriately employing various hitherto known methods. For example, a method can be employed where a PSA composition is directly provided (typically, applied) onto a substrate as described above (typically, a PVC film) followed by drying, thereby forming a PSA layer (direct method). Another method can also be employed where a PSA composition is provided onto a releasable surface (release side) followed by drying, thereby forming a PSA layer on the surface and then transferring the PSA layer to a substrate (transfer method). These methods may also be combined. As the release side, a surface of a release liner, a release-treated back side of a support substrate, and the like can be used.

The PSA composition can be applied with a known or commonly-used coater such as a gravure coater, a reverse roll coater, a kiss roll coater, a dip roll coater, a bar coater, a knife coater and a spray coater. The PSA layer is typically formed continuously, but may be formed in a regular pattern, such as dots or stripes, or a random patter, depending on a purpose and application.

With no particular limitation, the thickness of the PSA layer is typically 2 $\mu$m or more, commonly suitably 5 $\mu$m or more, preferably 10 $\mu$m or more, and more preferably 15 $\mu$m or more. The PSA layer having a larger thickness tends to facilitate exertion of good adhesive properties, e.g., more improvement in edge-peel prevention. The upper limit of the thickness of the PSA layer is commonly suitably 50 $\mu$m or less, preferably 40 $\mu$m or less, more preferably 30 $\mu$m or less, and yet more preferably 25 $\mu$m or less. Limitation of the thickness of the PSA layer may achieve weight reduction. This range of the thickness of the PSA layer can be preferably applied to, e.g., a PVC PSA tape used for protection or binding of electric wires, pipes and the like, covering of a corrugated tube as described above, and electric insulation. Particularly, this range can be preferably applied to a PSA tape used for protection or binding of electric wires of a wire harness.

The ratio of the thickness of the substrate layer $T_S$ [$\mu$m] to the thickness of the PSA layer $T_{PSA}$ [$\mu$m] ($T_S/T_{PSA}$) is not particularly limited, and can be set within a suitable range for exerting an effect by the art disclosed herein. In some embodiments, the ratio ($T_S/T_{PSA}$) preferably falls within the range of 6 to 13. Setting of the ratio ($T_S/T_{PSA}$) to 6 or more causes tendency to facilitate providing high abrasion resistance. Setting of the ratio ($T_S/T_{PSA}$) to 13 or less leads to ease of providing good adhesive properties (adhesiveness, etc.), softness and the like. The ratio ($T_S/T_{PSA}$) is more preferably 8 or more, and may be 9 or more, 10 or more, or 11 or more. The ratio ($T_S/T_{PSA}$) is also more preferably 12 or less, and may be 10.5 or less or 9.5 or less.

<Properties of PSA Tape>

The PSA tape disclosed herein preferably has a maximum stress of 24 N or less in a flexibility evaluation test measured by a method in the examples described later. A PSA tape having the flexibility described above can flexibly follow an adherend even when the adherend is deformed. In such a view, the maximum stress in the flexibility surface test is more preferably 23 N or less, and yet more preferably 21 N or less, and may be 18 N or less or 16 N or less (e.g., 15 N or less). A PSA tape satisfying the properties can be preferably applied to a PSA tape used for protection or binding of electric wires in a wire harness.

The PSA tape disclosed herein preferably has an edge peel length of approximately 2 mm or less (in particular, 2.4 mm or less) in an edge peel evaluation test measured by a method in the examples described later. The PSA tape having this edge-peel prevention can be well-reduced in peel from a wrapping end, e.g., when wrapped around electric wires or the like to be bound. In such a view, the end peel length is more preferably 1 mm or less (e.g., 0.8 mm or less, 0.6 mm or less or 0.5 mm or less), and yet more preferably 0 mm. A PSA tape satisfying the properties can be preferably applied to a PSA tape used for protection or binding of electric wires in a wire harness.

The total thickness of the PSA tape (including the thickness of the substrate layer and the thickness of the PSA layer, but not the thickness of the release liner) is sum of the substrate layer thickness and the PSA layer thickness as described above, and is more than 115 $\mu$m; in view of abrasion resistance, it is commonly suitably 130 $\mu$m or more, preferably 150 $\mu$m or more, more preferably 180 $\mu$m or more, yet more preferably 200 $\mu$m or more, and particularly

preferably 220 μm or more. In view of retaining a function, performance, etc. required for a PSA tape (e.g., edge-peel prevention and flexibility), the upper limit of the total thickness of the PSA tape is suitably less than 400 μm, and may be e.g., less than 350 μm, less than 300 μm, or less than 270 μm. Limitation of the total thickness of the PSA tape may also achieve weight reduction. In some embodiments, the total thickness of the PSA tape is 250 μm or less, and may be e.g., 230 μm or less or 210 μm or less. Even in such an embodiment using a PSA tape with a limited total thickness, the art disclosed herein can achieve high abrasion resistance. Such a total thickness of a PSA tape can be preferably applied to a PSA tape used for protection or binding of electric wires in a wire harness.

<Application>

The PSA tape disclosed herein retains a function and performance as a PSA tape required for various applications, as well as has good abrasion resistance, and thus can be used in various fields where it is desirable to have abrasion resistance. For example, it is favorable for applications such as protection or binding of electric wires, pipes and the like, covering of a corrugated tube that surrounds and protects electric wires or the like, and electric insulation. Particular examples of preferable applications include binding, fixation and the like of a wire harness (e.g., a wire harness for an automobile or another vehicle, or an aircraft, especially a wire harness for a vehicle or an aircraft including an internal combustion engine), and covering, binding, fixation, or the like of a corrugated tube for a wire harness. Furthermore, the PSA tape disclosed herein is not limited to these applications and can be also favorably used in various fields where a PVC PSA tape is used hitherto, such as a field of insulation, attachment, labeling, identification and the like of an interlayer and an outer surface of an electric part (transformers, coils, etc.), an electronic component and the like.
Examples of a particularly preferable subject to be applied with the PSA tape disclosed herein include an application where the PSA tape is used with being protected with a protection material. Even when used without an exterior protection material, the PSA tape disclosed herein can achieve durability required for the application owing to its own abrasion resistance, thus allowing omission of use of a protection material conventionally used for the application. For example, in a wire harness, use of the PSA tape disclosed herein as a PSA tape to be wrapped around electric wires can provide sufficient durability without use of a protection material conventionally required (e.g., an exterior protection material such as a corrugated tube, a twist tube or a PVC tube). In such a wire harness, the back side of the PSA tape cannot be covered with any protection material and can be exposed.
Several examples according to the present invention will now be described below, but is not intended to limit the present invention thereto. In the description below, "part" and "%" are based on mass unless otherwise specified.

<Example 1>

(Production of PVC Film)

The row materials shown in Table 1 were each weighed and mixed so as to provide the composition as indicated in the same table (i.e., composition containing components with the following amount: polyvinyl chloride (PVC) 61.6%, plasticizer A 30.8%, a stabilizer 1.2%, an auxiliary stabilizer 0.2%, and a filler 6.2%), followed by kneading, and then formed into a long film shape having a thickness of 190 μm at a molding temperature of 150°C using a calendar molding machine. In this manner, a PVC film according to this example was provided. The product named "S-70" (a product from Formosa Plastics Corporation, degree of polymerization: 1350) was used as the PVC; diisononyl phthalate (product name "DINP", manufactured by J-PLUS Co., Ltd.) was used as the plasticizer A; the product named "OW-5000LTS" (manufactured by Sakai Chemical Industry Co., Ltd., composite stabilizer for PVC) was used as the stabilizer; the product named "CHELEX300" (manufactured by Sakai Chemical Industry Co., Ltd., phosphite) was used as the auxiliary stabilizer; and calcium carbonate (product name "CS1600", manufactured by Riu Shang Industrial Co., Ltd) was used as the filler.

(Preparation of PSA Composition)

Under nitrogen stream, 100 parts of natural rubber latex (product name "HYTEX", available from Nomura Trading Co., Ltd.) and 1 part of an emulsifier (product name "NOPCO 38-C", manufactured by San Nopco Limited) were mixed at 30°C for 2 hours. Subsequently, a mixture of 10 parts of methyl methacrylate and 1 part of cumene hydroperoxide were added, then stirred and mixed for 1 hour, followed by addition of 0.4 parts of tetraethylene pentamine, then stirred and mixed for 4 hours to provide acrylic-modified natural rubber latex. Twenty parts of the acrylic-modified natural rubber latex in solids, 20 parts of natural rubber latex in solids (product name "HYTEX", available from Nomura Trading Co., Ltd.) and 60 parts of styrene-butadiene copolymer latex in solids (product name "2108", manufactured by JSR Corporation) were mixed to prepare rubber-based latex.
As a tackifier resin, 80 parts of an aliphatic-based petroleum resin (product name "RB100", manufactured by JXTG Energy Corporation (currently ENEOS Corporation)) and 20 parts of alkyl phenol resin (product name "FACKIROL 201", manufactured by Taoka Chemical Co., Ltd) were dissolved in 40 parts of heptane to produce a resin solution. Meanwhile, 4 parts of casein, 15 parts of 28% ammonia water relative to 100 parts of casein, and 60 parts of water were heated and dissolved at 70°C, to produce a casein solution in ammonia water. This was used as a protective colloid. The casein solution in ammonia water thus obtained was cooled to 40°C, mixed with 8 parts of an ammonium salt of hydrogenized rosin (containing 60% dihydroabietic acid) as an emulsifier, then added to the resin solution, and stirred at 40°C at a rotation speed of 800 rpm for 1 hour using a T.K. homodisper (manufactured by Tokush Kika Kogyo Co., Ltd. (currently PRIMIX Corporation)), to prepare a tackifier resin emulsion.

An aqueous PSA composition was obtained by mixing 100 parts (solid content basis) of the rubber-based latex thus obtained and 100 parts (solid content basis) of a tackifier resin emulsion.

(Production of PVC PSA Tape)

The PSA composition was applied onto one side of the PVC film using a comma direct coater, allowed to dry, and rolled up with an enough length to perform the evaluation test described later. The application amount of the PSA composition was adjusted so as to provide a thickness of 20 µm for a PSA layer formed after drying. This was cut (slit) with a width of 19 mm, thereby providing a PSA tape according to this example, which includes a PSA layer on one side of a PVC film.

<Examples 2 to 9 and Comparative Example 1>

A PSA tape according to each example was produced in the same manner as Example 1 except for setting the composition of PVC film, the thickness of PVC film and the thickness of a PSA layer as shown in Table 1.

<Example 10>

(Production of PVC Film)

The row materials shown in Table 1 were each weighed and mixed so as to provide the composition as indicated in the same table (i.e., composition containing components with the following amount: PVC 57.4%, plasticizer B 28.3%, plasticizer C 7.1%, a stabilizer 1.2%, an auxiliary stabilizer 0.2%, and a filler 5.8%), followed by kneading, and then formed into a long film shape having a thickness of 190 µm at a molding temperature of 150°C using a calendar molding machine. In this manner, a PVC film according to this example was provided. The product named "S-70" (a product from Formosa Plastics Corporation, degree of polymerization: 1350) was used as the PVC; a polyester-based plasticizer (product name "W-2314", manufactured by DIC Corporation) was used as the plasticizer B; tris 2-ethylhexyl trimellitate (product name "TOTM", manufactured by DIC Corporation) was used as the plasticizer C; the product named "OW-5000LTS" (manufactured by Sakai Chemical Industry Co., Ltd., composite stabilizer for PVC) was used as the stabilizer; the product named "CHELEX300" (manufactured by Sakai Chemical Industry Co., Ltd., phosphite) was used as the auxiliary stabilizer; and calcium carbonate (product name "CS1600", manufactured by Riu Shang Industrial Co., Ltd) was used as the filler.

(Preparation of PSA Composition)

To 100 parts of a mixture consisting of 92% of 2-ethylhexylacrylate (manufactured by Mitsubishi Chemical Corporation), 5% of n-butylacrylate (manufactured by Mitsubishi Chemical Corporation), 2% of methacryl acid (manufactured by Mitsubishi Chemical Corporation) and 1% of acrylic acid (manufactured by Toagosei Co., Ltd.), 0.03 parts of a water-soluble azo-based initiator (trade name "V-50", manufactured by Wako Pure Chemical Corporation (currently FUJIFILM Wako Pure Chemical Corporation) was added as a polymerization initiator, emulsified with 2 parts of a reactive emulsifier (trade name "AQUALON BC-2020", manufactured by Daiichi Kogyo Co., Ltd.), and polymerized at about 60°C for 2 hours by emulsion polymerization with a bulk polymerization system, to prepare an acrylic polymer emulsion.

To 100 parts of the acrylic emulsion (solids) thus obtained as described above, 5 parts of the product with trade name "E-865" (manufactured by Arakawa Chemical Industries, Ltd., rosin ester-based resin) as a rosin-based resin, and 0.03 parts of the product with trade name "TETRAD-C" (manufactured by Mitsubishi Gas Chemical Company, Inc., epoxy-based crosslinking agent) as a crosslinking agent were added, and mixed at normal temperature (20 to 25°C) at a rotation speed of about1,000 to 2,000 rpm for about 10 minutes with a homomixer, to provide an emulsified acrylic PSA composition.

(Production of PVC PSA Tape)

The PSA composition was applied onto one side of the PVC film using a comma direct coater, allowed to dry, and rolled up with an enough length to perform the evaluation test described later. The application amount of the PSA composition was adjusted so as to provide a thickness of 20 μm for a PSA layer formed after drying. This was cut (slit) with a width of 19 mm, thereby providing a PSA tape according to this example, which includes a PSA layer on one side of a PVC film.

<Examples 11 to 12>

A PSA tape according to each example was produced in the same manner as Example 10 except for setting the composition of PVC film and the thickness of PVC film as shown in Table 1.

<Examples 13 to 23 and Comparative Examples 2 to 5>

A PSA tape according to each example was produced in the same manner as Example 1 except for setting the composition of PVC film and the thickness of PVC film as shown in Table 2. As elastomers, a thermoplastic polyester copolymer (thermoplastic polyester elastomer (TPEE), product name "HYTREL 3001", manufactured by Du Pont-Toray Co., Ltd.), an acrylonitrile-butadiene copolymer (NBR, product name "NIPOL 1052J", manufactured by Zeon Corporation), a thermoplastic polyurethane copolymer (thermoplastic polyurethane elastomer (TPU) (waterproof polyester-based), product name "C80A10", manufactured by BASF Japan Ltd.), a thermoplastic polyurethane copolymer (TPU (polyether-based), product name "1180A10 CLEAR", manufactured by BASF Japan Ltd.), and a thermoplastic polyurethane copolymer (TPU (polycarbonate-based), product name "XET1180-10", manufactured by BASF Japan Ltd.) were used.

<Examples 24 to 25 and Comparative Example 6>

A PSA tape according to each example was produced in the same manner as Example 10 except for setting the composition of PVC film and the thickness of PVC film as shown in Table 2.

<Evaluation>

[Abrasion Resistance Test]

An abrasion resistance test (sand paper method) was performed in accordance with ISO6722. Specifically, under an environment adjusted to a temperature of 23°C ± 5°C and a relative humidity (RH) of 45 to 75%, a PSA tape to be evaluated (with a width of 19 mm) was layered such that a layer of the tape is attached onto the back side of another layer of the tape with fitting their edges in line using a hand roller and thereby forms two layers. The resultant tape with two overlapping layers was attached to a metal rod having a diameter of 10 mm to produce a sample for evaluation. As the metal rod, a hollow copper rod was used that is made of a copper material and has an inner diameter of φ10 mm and a thickness of 1 mm. This attachment of two layers of the tape mimics a tape wrapped around the outside of bundled electric wires or the like with half wrapping in practical use. Half wrapping refers to wrapping where in wrapping of a PSA tape, a half width of the PSA tape overlaps with a half width of a PSA tape previously wrapped. Half wrapping makes a PSA tape overlap doubly (as two layers) with a wrapped subject in a thickness direction.

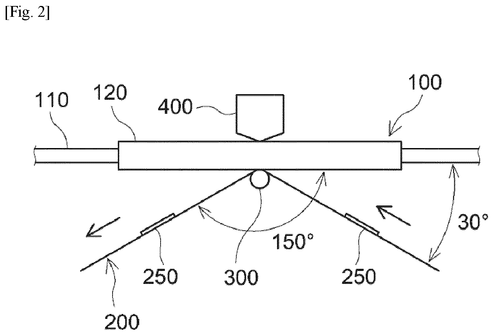

As a sand paper, prepared was a sand paper where stripe-shaped electrically conductive portion having a width of 10 mm in a length direction was attached at an interval of 150 mm onto an abrasive side of a sand paper # 150AA (manufactured by Sankyo Rikagaku Co., Ltd.). Then, as shown in Fig. 2, an evaluation sample 100 and sand paper 200 were set such that the sand paper 200 having a belt shape contacts with the evaluation sample 100 placed horizontally, at an angle of 30° relative to the evaluation sample 100 and moves. In the evaluation sample 100 in the figure, a symbol 110 represents a metal rod, and a symbol 120 represents a PSA tape. In addition, the sand paper 200 includes electrically conductive portions 250 arranged at a constant interval (an interval of 150 mm). The sand paper 200 was disposed so as to contact with the evaluation sample 100 by a cylindrical metal rod 300, which is located beneath the sand paper 200 and has a diameter of 7.5 mm. Furthermore, a weight of 450 gf was applied to the upper part of the evaluation sample 100 by a weight 400, and the sand paper 200 was moved (rotationally moved) relative to the evaluation sample 100 at a speed of 1500 mm/min under an environment adjusted to 23°C ± 5°C and 45 to 75% RH. A sand paper transfer distance was measured until the PSA tape 120 of the evaluation sample 100 becomes abrasive, causing the metal rod 110 of the evaluation sample 100 to come in contact with the sand paper 200. The measurements were performed five times (N = 5), and the mean value was defined as an abrasive resistance value [mm]. The sand paper transfer distance was detected and measured by continuity between the electrically conductive portion 250 on the sand paper 200 and the metal rod 110 of the evaluation sample 100.

[Flexibility Evaluation Test]

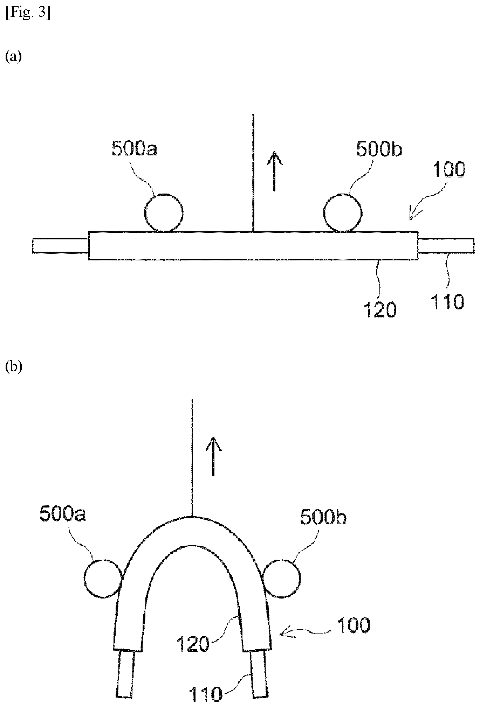

Referring to JIS K7171, and under an environment adjusted to 23°C ± 5°C and 45 to 75% RH, fourteen electric wires in total consisting oftenAVSS 0.6 sq electric wires (thin low-voltage electric wires for automobiles) and four AVSS 0.75 sq electric wires (thin low-voltage electric wires for automobiles) having a length of 500 mm were bundled, and the bundled electric wire were bound in a portion having a length of about 400 mm by half wrapping using a PSA tape to be evaluated with applying a weight to the end of the tape, thereby producing an evaluation sample. The weight was 50 g per a tape thickness of 25 $\mu$m. Subsequently, as shown in Fig. 3 (a), a jig was set where two metal rods 500a and 500b having a diameter of 20 mm were parallelly fixed so as to provide the same level of height with an interval of 100 mm, and the evaluation sample 100 was disposed beneath the metal rods 500a and 500b so as to be perpendicular to the longitudinal direction of the metal rods 500a and 500b and to make the center of the evaluation sample 100 located at the midpoint of the metal rods 500a and 500b. Then, under the same environment, as shown in Fig. 3 (b), the center of the evaluation sample 100 was pulled upward at a rate of 1 mm/sec until slipping out from between two metal rods 500a and 500b using a tensile tester, and the maximum stress [N] at this time was measured. The measurements were performed five times (N = 5), and the mean value was used. When the maximum stress is 24 N or less, flexibility is determined as passed. In the evaluation sample 100 in the figure, a symbol 110 represents bundled electric wires, and a symbol 120 represents a PSA tape.

[Edge Peel Evaluation Test]

Under an environment adjusted to 23°C ± 5°C and 45 to 75% RH, a bundle of fourteen electric wires in total consisting oftenAVSS 0.6 sq electric wires (thin low-voltage electric wires for automobiles) and four AVSS 0.75 sq electric wires (thin low-voltage electric wires for automobiles) having a length of 350 mm were prepared, and two rounds of a PSA tape to be evaluated was wrapped around the bundled electric wires with applying a weight to the end of the tape. The wrapping of the PSA tape (two rounds of wrapping) was performed at 10 sites on the bundled electric wire, at an approximately constant interval so as not to allow each wrapping to overlap. The weight was 50 g per a tape thickness of 25 $\mu$m. The bundled electric wires wrapped with the PSA tape was bent in a circle form with a diameter of 80 mm, and fixed at both ends. The circular sample thus obtained was charged into an oven set to 80°C, kept for 4 hours, then removed from the oven and left at room temperature (23°C ± 5°C). After the temperature of the sample is the same as room temperature, a peel length of the PSA tape-wrapped end of the sample (a length of a section where floating occurs from the end of the PSA tape) [mm] was measured with a caliper (N = 10), and the mean value was derived as an edge peel length [mm]. When the edge peel length is about 2 mm or less (2.4 mm or less), edge-peel prevention is determined as passed.

For a PSA tape according to each example, an abrasive resistance value [mm], flexibility [N] and edge-peel prevention (edge peel length [mm]) were evaluated. The evaluation results are shown in Tables 1 and 2. Tables 1 and 2 also show outlines of PSA tapes.

[Table 1]

Table 1

| | | Example 1 | Example 2 | Example 3 | Example 4 | Example 5 | Example 6 | Example 7 | Example 8 | Example 9 | Example 10 | Example 11 | Example 12 | Comparative Example 1 |
|---|---|---|---|---|---|---|---|---|---|---|---|---|---|---|
| Composition of substrate [wt%] | PVC | 61.6% | 61.6% | 61.6% | 65.6% | 65.6% | 62.7% | 58.7% | 65.6% | 63.5% | 57.4% | 59.6% | 61.9% | 64.0% |
| | Plasticizer A | 30.8% | 30.8% | 30.8% | 26.3% | 26.3% | 295% | 34.0% | 26.3% | 286% | - | - | - | 31.3% |
| | Plasticizer B | - | - | - | - | - | - | - | - | - | 28.3% | 26.4% | 24.4% | - |
| | Plasticizer C | - | - | - | - | - | - | - | - | - | 7.1 % | 6.6% | 6.1% | - |
| | Stabilizer | 1.2% | 1.2% | 1.2% | 1.3% | 1.3% | 1.3% | 1.2% | 1.3% | 1.3% | 1.2% | 1.2% | 1.2% | 1.3% |
| | Auxiliary stabilizer | 0.2% | 0.2% | 0.2% | 0.2% | 0.2% | 0.2% | 0.2% | 0.2% | 0.2% | 0.2% | 0.2% | 0.2% | 0.2% |
| | Filler | 6.2% | 6.2% | 6.2% | 6.6% | 6.6% | 6.3% | 5.9% | 6.6% | 6.4% | 5.8% | 60% | 6.2% | 3.2% |
| Type of PSA | | Rubber | Rubber | Rubber | Rubber | Rubber | Rubber | Rubber | Rubber | Rubber | Acrylic | Acrylic | Acrylic | Rubber |
| Thickness [μm] | Total thickness | 210 | 230 | 250 | 210 | 223 | 175 | 303 | 160 | 175 | 190 | 175 | 190 | 100 |
| | Substrate layer ($T_S$) | 190 | 210 | 230 | 190 | 200 | 160 | 280 | 140 | 155 | 170 | 155 | 170 | 85 |
| | PSA layer ($T_{PSA}$) | 20 | 20 | 20 | 20 | 23 | 15 | 23 | 20 | 20 | 20 | 20 | 20 | 15 |
| Evaluation of tape properties | Abrasive resistance value [mm] | 750 | 900 | 1,200 | 1,050 | 1,230 | 390 | 1,050 | 570 | 600 | 690 | 660 | 840 | 150 |
| | Flexibility [N] | 1995 | 17.57 | 1997 | 18.92 | 18.4 | 17.7 | 23.9 | 17.95 | 17.9 | 18.6 | 18.2 | 18.5 | 19.25 |
| | Edge peel length [mm] | 0.7 | 1.3 | 1.3 | 0.5 | 1.2 | 1.5 | 2.1 | 0.8 | 1.5 | 0.7 | 1.2 | 0.6 | 0.3 |

EP 4 249 242 A1

21

Table 2

| | | Example 13 | Example 14 | Example 15 | Example 16 | Example 17 | Example 18 | Example 19 | Example 20 | Example 21 | Example 22 | Example 23 | Example 24 | Example 25 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|---|

| | | Example 13 | Example 14 | Example 15 | Example 16 | Example 17 | Example 18 | Example 19 | Example 20 | Example 21 | Example 22 | Example 23 | Example 24 | Example 25 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|---|
| Composition of substrate [wt%] | PVC | 58.0% | 60.1% | 60.1% | 69.3% | 69.3% | 69.3% | 61.6% | 61.6% | 61.6% | 61.6% | 61.6% | 57.1% | 65.9% | 580% | 580% | 65.6% | 69.3% | 57.1% |
| | Elastomer: TPEE | - | - | - | - | - | - | 6.2% | - | - | - | - | - | - | - | - | - | - | - |
| | Elastomer: NBR | - | - | - | - | - | - | - | 6.2% | | | | | | | | | | |
| | Elastomer :TPU (polyester) | - | - | - | - | - | - | - | - | 6.2% | | | - | - | - | | - | - | - |
| | Elastomer :TPU (polyether) | | | | | | | | | | 6.2% | | - | - | - | | - | - | - |
| | Elastomer TPU (carbonate) | - | - | - | - | - | - | - | - | - | - | 6.2% | - | - | - | - | - | - | - |
| | Plasticizer A | 34.8 % | 32.5% | 32.5% | 22.2% | 22.2% | 22.2% | 24.6 % | 24.6 % | 24.6 % | 24.6 % | 24.6 % | - | - | 34.8% | 34.8% | 26.3% | 22.2% | - |
| | Plasticizer B | - | - | - | - | - | - | - | - | - | - | - | 28.7 % | 20.8% | - | - | - | - | 28.7% |
| | Plasticizer C | - | - | - | - | - | - | - | - | - | - | - | 7.2% | 52% | - | - | - | - | 72% |
| | Stabilizer | 1.2% | 1.2% | 1.2% | 1.4% | 1.4% | 1.4% | 1.2% | 1.2% | 1.2% | 1.2% | 1.2% | 1.1% | 1.3% | 1.2% | 1.2% | 1.3% | 1.4% | 1.1% |
| | Auxiliary stabilizer | 0.2% | 0.2% | 0.2% | 0.2% | 0.2% | 0.2% | 0.2% | 0.2% | 0.2% | 0.2% | 0.2% | 0.2% | 0.2% | 0.2% | 0.2% | 0.2% | 0.2% | 0.2% |
| | Filler | 5.8% | 60% | 60% | 6.9% | 6.9% | 6.9% | 6.2% | 6.2% | 6.2% | 6.2% | 6.2% | 57% | 6.6% | 5.8% | 5.8% | 6.6% | 6.9% | 5.7% |

EP 4 249 242 A1

23

EP 4 249 242 A1

(continued)

| | | Example 13 | Example 14 | Example 15 | Example 16 | Example 17 | Example 18 | Example 19 | Example 20 | Example 21 | Example 22 | Example 23 | Example 24 | Example 25 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|---|
| Type of PSA | | Rubber | Rubber | Rubber | Rubber | Rubber | Rubber | Rubber | Rubber | Rubber | Rubber | Rubber | Acrylic | Acrylic | Rubber | Rubber | Rubber | Rubber | Acrylic |
| Thickness [μm] | Total thickness | 160 | 160 | 200 | 140 | 180 | 250 | 200 | 200 | 200 | 200 | 200 | 200 | 170 | 140 | 430 | 130 | 430 | 135 |
| | Substrate layer ($T_S$) | 140 | 140 | 180 | 120 | 160 | 230 | 180 | 180 | 180 | 180 | 180 | 180 | 150 | 120 | 410 | 110 | 410 | 115 |
| Evaluation of tape properties | Abrasive resistance value L [mm] | 360 | 510 | 600 | 300 | 930 | 2,280 | 720 | 840 | 900 | 900 | 990 | 630 | 780 | 250 | 2,380 | 290 | 5,520 | 200 |
| | Flexibility [N] | 11.1 | 12.5 | 14.5 | 11.1 | 19.9 | 23.2 | 14.5 | 14.0 | 15.6 | 12.2 | 14.3 | 14.8 | 15.5 | 9.8 | 24.5 | 13.0 | NG | 11.2 |
| | Edge peel length [mm] | 0.4 | 0.5 | 0.6 | 0.6 | 0.8 | 1.7 | 0.3 | 0.3 | 0.6 | 0.2 | 0.3 | 0.8 | 0.5 | 0.3 | 2.2 | 0.3 | 5.6 | 0.2 |

24

As shown in Tables 1 and 2, in the PSA tapes according to Examples 1 to 25, the content of a plasticizer in a substrate layer fell within the 20% by mass or more to less than 36% by mass, and the thickness of a substrate layer fell within more than 115 $\mu$m to less than 400 $\mu$m, and an abrasive resistance value was 300 mm or more in an abrasion resistance test measured under conditions with a weight of 450 g and a sand paper transfer rate of 1500 mm/min in accordance with ISO6722, indicating good abrasion resistance. The PSA tapes in Example 1 to 25 were at a passing level for evaluation results of both flexibility and edge-peel prevention. By contrast, the PSA tapes according to Comparative Examples 1 to 2, 4, 6 had an abrasive resistance value of less than 300 mm, indicating failure to provide desired abrasion resistance. Moreover, in the PSA tapes according to Comparative Examples 3 and 5, the thickness of a substrate layer was 400 $\mu$m or more, resulting as failed in the flexibility evaluation test. Comparative Example 5 included a hard substrate, and failed to produce an evaluation sample in the flexibility evaluation test.

The results suggested that in a PSA tape including a substrate layer formed from a polyvinyl chloride-based film and a PSA layer disposed on at least one side of the substrate layer, setting of the thickness of the substrate layer to more than115 $\mu$m to less than 400 $\mu$m and appropriate selection of the content of a plasticizer in the substrate layer within the range of 20% by mass or more to less than 36% by mass can retain a function, performance, etc. required for a PSA tape (e.g., flexibility and edge peel prevention), as well as achieve abrasion resistance with an abrasive resistance value of 300 mm or more by a prescribed abrasion resistance test.

Although specific embodiments of the present invention have been described in detail so far, these are merely illustrative and do not limit the scope of the claims. The art recited in the claims includes various modifications and changes made to the specific embodiments illustrated above.

[Reference Signs List]

1: PVC PSA tape
11: substrate layer
11A: first side
11B: second side
21: PSA layer
21A: surface (PSA side)

**Claims**

1. A pressure-sensitive adhesive tape comprising a substrate layer including a polyvinyl chloride-based film, and a pressure-sensitive adhesive layer on at least one side of the substrate layer,

   wherein the substrate layer comprises polyvinyl chloride and a plasticizer,
   the content of the plasticizer in the substrate layer is 20% by mass or more to less than 36% by mass,
   the thickness of the substrate layer is more than 115 $\mu$m to less than 400 $\mu$m, and
   the pressure-sensitive adhesive tape has an abrasive resistance value of 300 mm or more in an abrasion resistance test as measured under conditions with a weight of 450 g and a sand paper transfer rate of 1500 mm/min in accordance with ISO6722.

2. The pressure-sensitive adhesive tape according to claim 1, wherein the abrasive resistance value is 500 mm or more.

3. The pressure-sensitive adhesive tape according to claim 1 or 2, wherein the ratio ($T_S/T_{PSA}$) of the thickness of the substrate layer $T_S$ [$\mu$m] to the thickness of the pressure-sensitive adhesive layer $T_{PSA}$ [$\mu$m] is within 6 to 13.

4. The pressure-sensitive adhesive tape according to any one of claims 1 to 3,

   wherein the substrate layer further comprises an elastomer, and
   the content of the elastomer is less than 50% by mass in the substrate layer.

5. The pressure-sensitive adhesive tape according to any one of claims 1 to 4, wherein the substrate layer comprises at least one of carboxylate ester and a polyester-based plasticizer as the plasticizer.

6. The pressure-sensitive adhesive tape according to any one of claims 1 to 5, wherein the pressure-sensitive adhesive layer is formed from a water-dispersed pressure-sensitive adhesive composition comprising rubber latex or an acrylic polymer emulsion, and a tackifier resin emulsion.

7. A wire harness comprising an electric wire, and a pressure-sensitive adhesive tape set forth in any one of claims 1 to 6, the pressure-sensitive adhesive tape being wrapped around the electric wire,
where the back side of the pressure-sensitive adhesive tape is not covered with a protection material and is exposed.

[Fig. 1]

[Fig. 2]

[Fig. 3]

(a)

(b)

## INTERNATIONAL SEARCH REPORT

| | International application No. |
|---|---|
| | **PCT/JP2021/042620** |

**A. CLASSIFICATION OF SUBJECT MATTER**

*B32B 27/00*(2006.01)i; *B32B 27/18*(2006.01)i; *B32B 27/30*(2006.01)i; *C09J 107/02*(2006.01)i; *C09J 133/04*(2006.01)i; *H01B 7/00*(2006.01)i; *C09J 7/24*(2018.01)i; *C09J 7/38*(2018.01)i; *B32B 7/022*(2019.01)i

FI: C09J7/24; C09J7/38; C09J107/02; C09J133/04; B32B7/022; B32B27/00 M; B32B27/18 Z; B32B27/30 101; H01B7/00 301

According to International Patent Classification (IPC) or to both national classification and IPC

**B. FIELDS SEARCHED**

Minimum documentation searched (classification system followed by classification symbols)

B32B27/00; B32B27/18; B32B27/30; C09J107/02; C09J133/04; H01B7/00; C09J7/24; C09J7/38; B32B7/022

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-194033 A (NITTO DENKO CORP.) 17 November 2016 (2016-11-17) paragraphs [0102]-[0112], [0116], table 2, examples 4, 11 | 1, 3-7 |
| Y | paragraphs [0002], [0046], [0059], [0073], [0101], examples | 3-4, 6-7 |
| X | JP 7-41741 A (YAZAKI CORP.) 10 February 1995 (1995-02-10) paragraphs [0001], [0024], table 1, example 1 | 1-2, 5, 7 |
| Y | paragraphs [0001], [0024], table 1, example 1 | 3-4, 6 |
| X | JP 2018-30936 A (DENKA CO., LTD.) 01 March 2018 (2018-03-01) paragraphs [0033]-[0035], table 1, examples 1, 2, 6-9 | 1-3, 5-6 |
| Y | paragraphs [0002], [0033]-[0035], table 1, examples 1, 2, 6-9 | 4, 7 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **17 January 2022** | **01 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2021/042620** |

**C.    DOCUMENTS CONSIDERED TO BE RELEVANT**

| Category* | Citation of document, with indication, where appropriate, of the relevant passages | Relevant to claim No. |
| --- | --- | --- |
| X | JP 3-160081 A (SEKISUI CHEMICAL CO., LTD.) 10 July 1991 (1991-07-10)<br>page 2, upper right column, lines 8-14, page 4, lower right column, line 1 to page 5, upper right column, line 3, table 1, examples, experimental numbers 2, 3, 6, 7 | 1-3, 5, 7 |
| Y | page 2, upper right column, lines 8-14, page 4, lower right column, line 1 to page 5, upper right column, line 3, table 1, examples, experimental numbers 2, 3, 6, 7 | 4, 6 |

Form PCT/ISA/210 (second sheet) (January 2015)

**INTERNATIONAL SEARCH REPORT**
Information on patent family members

International application No.

**PCT/JP2021/042620**

| Patent document cited in search report | | | Publication date (day/month/year) | Patent family member(s) | Publication date (day/month/year) |
|---|---|---|---|---|---|
| JP | 2016-194033 | A | 17 November 2016 | US 2016/0289506 A1 paragraphs [0005], [0052], [0053], [0068], [0082], [0150], [0185]-[0205], table 2, examples 4, 11 | |
| JP | 7-41741 | A | 10 February 1995 | (Family: none) | |
| JP | 2018-30936 | A | 01 March 2018 | (Family: none) | |
| JP | 3-160081 | A | 10 July 1991 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020193648 A
- WO 2019069577 A
- WO 2018225541 A
- WO 2019049565 A

**Non-patent literature cited in the description**

- **C. A. DAHLQUIST.** Adhesion: Fundamental and Practice. McLaren & Sons, 1966, 143